(19) **Europäisches Patentamt**
**European Patent Office**
**Office européen des brevets**

(11) **EP 1 906 673 B1**

(12) **EUROPEAN PATENT SPECIFICATION**

(45) Date of publication and mention
of the grant of the patent:
**09.03.2011 Bulletin 2011/10**

(51) Int Cl.:
*H04N 9/69* *(2006.01)*     *G06F 13/00* *(2006.01)*
*H04N 1/32* *(2006.01)*     *H04N 1/407* *(2006.01)*

(21) Application number: **06753106.1**

(22) Date of filing: **05.07.2006**

(86) International application number:
**PCT/CN2006/001577**

(87) International publication number:
**WO 2007/006209 (18.01.2007 Gazette 2007/03)**

(54) **METHOD, SYSTEM AND TERMINAL FOR NEGOTIATING TO CORRECT THE GAMMA CHARACTERISTIC**

VERFAHREN, SYSTEM UND ENDGERÄT ZUM AUSHANDELN ZUR KORREKTUR DER GAMMAKURVE

PROCEDE, SYSTEME ET TERMINAL DE NEGOCIATION DESTINES A CORRIGER LA CARACTERISTIQUE GAMMA

(84) Designated Contracting States:
**AT BE BG CH CY CZ DE DK EE ES FI FR GB GR HU IE IS IT LI LT LU LV MC NL PL PT RO SE SI SK TR**

(30) Priority: **07.07.2005 CN 200510082954**

(43) Date of publication of application:
**02.04.2008 Bulletin 2008/14**

(73) Proprietor: **Huawei Technologies Co., Ltd.
Shenzhen, Guangdong Province 518129 (CN)**

(72) Inventor: **LUO, Zhong
Guangdong Province 518129 (CN)**

(74) Representative: **Thun, Clemens et al
Mitscherlich & Partner
Sonnenstraße 33
80331 München (DE)**

(56) References cited:
**EP-A- 0 487 308          EP-A- 1 043 885
EP-A- 1 207 463          EP-B- 1 133 722
JP-A- 2000 083 123      JP-A- 2004 104 248
US-A1- 2005 017 989**

• **HOLMSTEAD S ET AL: "JETSEND PROTOCOL ON IRDA, APPLICATION NOTE" INTERNET CITATION, [Online] XP002152317 Retrieved from the Internet: URL:http://www.irda.org/> [retrieved on 2000-11-08]**

## Description

Field of the Invention

The present invention relates to the technical field of video communications, and in particular, to a method, system and terminal for correcting the Gamma characteristics of a communication signal exchanged between terminals through negotiation.

Background of the Invention

V ideo communication, especially the multi-party video communication, has an increasingly extensive application with the rapid development of the broadband networks. The video conferencing and visual telephony are now becoming fundamental services over the Next Generation Network (NGN). Telecom operators in various countries pay much attention to this market opportunity. It can be anticipated that in forthcoming years, the video communication service will become an important service growth point for operators. A key point in developing such service is improving the end-to-end user experience - or so-called Quality of Experience. In the user experience, besides the Quality of Service (QoS) parameters of the network including packet loss, delay, jitter, R factor, etc., the Gamma nonlinear issue caused by various elements, which leads to distortion of the luminance signal with respect to the video, is an important factor that may influence the final user experience. However, the method and technology for improving the end-to-end user experience at present mainly focus on those aspects such as assuring the network QoS and the Pre-processing/ Post-processing relevant to the video compression encoding. With respect to the luminance distortion issue caused by the Gamma characteristics, neither sufficient attention is paid, nor has a systematic solution been developed. The seriousness of this issue is drawing attention of some large international telecom operators. France Telecom has recently put forward a suggestion in ITU-T that the influence of the Gamma characteristics upon the communication user experience should be considered in the video communication, and such issue should be resolved.

In the video communication, optical signal of the scenario (human, background, document, etc.) that needs to be transferred enters a video recorder/camera in a video communication terminal (referred to as terminal hereinafter). The optical signal is transformed into a digital still image or video signal via A/D conversion and compressed and encoded, and then transferred to a far-end terminal, where the digital still image or video signal is obtained again via decompression and displayed on a display device. Finally, the optical signal is perceived by human eyes. In this process, the luminance signal of the still image or video passes a plurality of elements. The luminance signal is a generalized luminance signal. In other words, signals in each phase, including the original optical signal, the electrical signal, and the digitized still image or video luminance/grey scale signal, all contain information of the luminance signal. Therefore, in a broad sense, the luminance signal passes a plurality of elements. According to the definition, the Gamma characteristics refer to that the input-output relation of the luminance signal in an element is not linear, i.e., there exists nonlinearity.

Practically, the Gamma nonlinearity may be caused by different reasons. With respect to a Cathode Ray Tube (CRT) display device such as TV set and PC monitor, the Gamma characteristics satisfy the following relation given by equation 1 in an ideal situation:

$$L_{out} = L_{in}^{2.2} \qquad\qquad (1)$$

Equation 1 is a power function. It should be noted that the input and output luminance signals are both normalized in their respective coordinate systems, i.e., $0 \leq L_{out} \leq 1$, $0 \leq L_{in} \leq 1$. For display of other type, such as Liquid Crystal Display (LCD), the form or parameters of the Gamma function may be different.

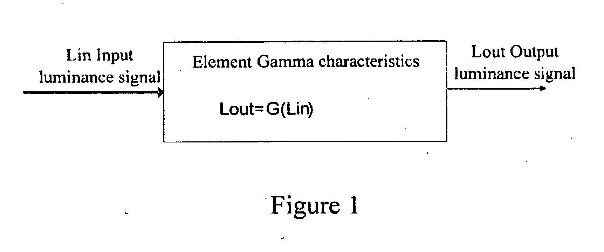

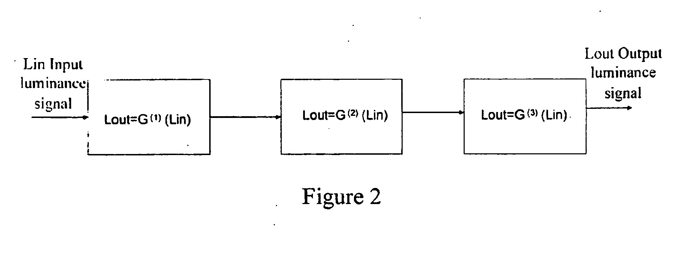

A model of the Gamma characteristics of an individual element is as shown in Figure 1, and the model of the Gamma characteristics of a plurality of cascaded elements is as shown in Figure 2. The total Gamma characteristics equals the composition of the Gamma functions of each element, which satisfies Equation 2:

$$G_{CT}(.) = G^{(1)}(.) \circ G^{(2)}(.) \circ G^{(3)}(.)........G^{(n-1)}(.) \circ G^{(n)}(.)$$

$$l_{out} = G_{CT}(l_{in}) = G^{(n)}(G^{(n-1)}(G^{(n-2)}(.......G^{(2)}(G^{(1)}(l_{in}))))) \qquad (2).$$

where "$\circ$" represents a composition operation of functions. CT represents Cascaded Total, i.e., the total Gamma of the cascaded elements.

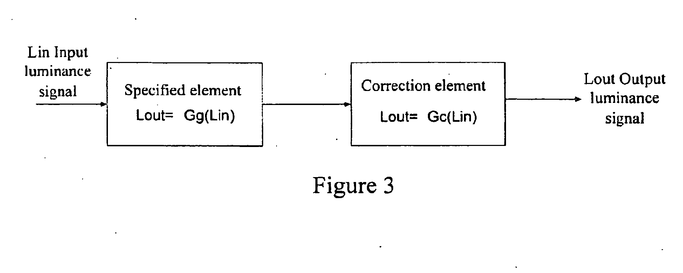

In an ideal situation, there exists a linear relation between input and output luminance signals, i.e., $L_{out}= L_{in}$, thus the scene perceived is the same as the original one, and the user may have the best experience. In order to obtain the linear relation, a Gamma correction should be performed for the element with nonlinear Gamma characteristics. As shown in Figure 3, the Gamma characteristics are specified for elements, and a further correction element may be cascaded thereafter, so that the total Gamma characteristics after cascading become a real linear relation, and the object of compensating the nonlinearity of the specified elements may be achieved. The model of the correction element is the inverse model of the equivalent model of Gamma characteristics. If the equivalent model can be represented with a function, the function of the inverse model is the inverse function thereof. Obviously, Gg(.) and $G_c$(.) are mutually inverse functions with respect to each other. Normally, for a function, the inverse function thereof does not always exist (or even if the inverse function exists, the inverse function may not be obtained in a closed-form).

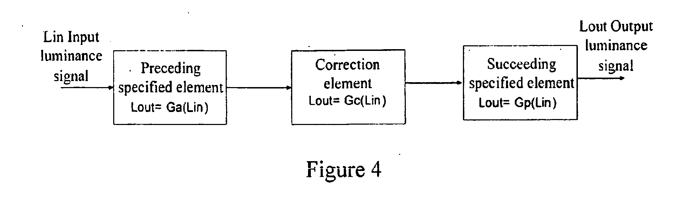

As shown in Figure 4, in practical applications, the correction element usually needs to be inserted between two specified elements. At this time, the situation is more complicated with respect to $G_c$(.), because there exists no simple inverse function relation between $G_c$(.) and $G_a$(.) or between $G_c$(.) and $G_p$(.).

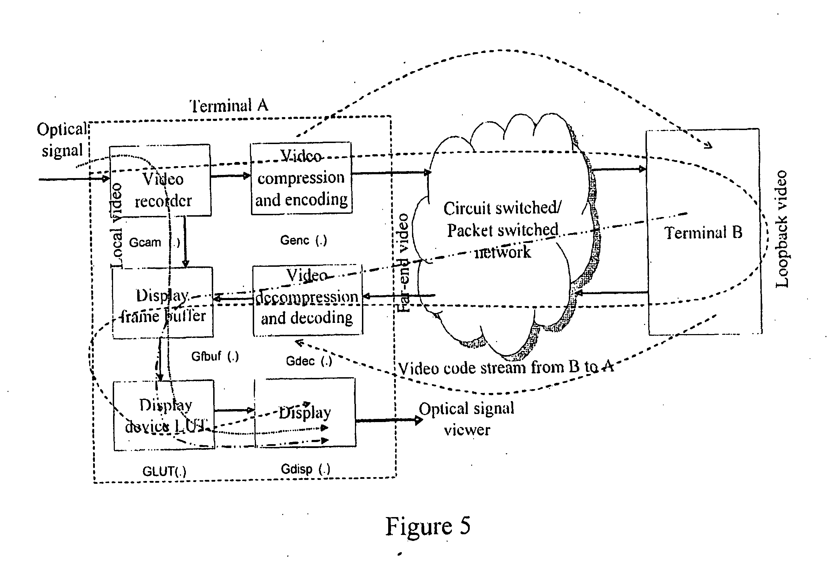

The main Gamma elements involved in a video communication between terminal A and terminal B are as shown in Figure 5.

1. Video recorder/Camera Gamma, referred to as $G_{Cam}$(.);

A normal video recorder possesses Gamma characteristics. Besides the nonlinearity of an imaging device such as CCD, an artificial nonlinearity is introduced into the video recorder in order to compensate the Gamma characteristics of the display exactly with the Gamma characteristics of the video recorder, so that the total Gamma characteristic is linear. If the ideal Gamma of the display is: $L_{out}= L_{in}^{2.2}$, the ideal Gamma of the video recorder is $L_{out}= L_{in}^{0.45}$.

Therefore, the Gamma characteristics of the video recorder are determined theoretically by the Gamma characteristics of the display. However, the terminal system becomes increasingly complicated, and there exists a plurality of elements between the video recorder and the display, the number of the elements is a variable, and the respective Gamma characteristics are unknown. Therefore, even if the Gammas of the video recorder and the display are exactly matched and can fully compensate each other, such compensation is usually invalid due to the existence of intermediate elements. Furthermore, there exist various displays, such as CRT display, LCD and plasma display, whose Gamma characteristics may differ from each other greatly. The Gamma characteristics of a low-cost camera usually deviate from the ideal Gamma seriously

2. Display frame buffer Gamma, referred to as $G_{FBuf}$(.);

In early stage, Gamma characteristics were introduced into a display because the color depth of a display buffer is not sufficient. For example, instead of an ideal 24-bit real color, only color depth of 4 bits, 8 bits or 16 bits can be supported, which equals a compression of the dynamic range of the input luminance signal. Furthermore, the nonlinear Gamma may also be introduced into the palette color mapping technology or dither technology employed in the non-real color mode.

3. Look-up Table Gamma, referred to as $G_{LUT}$(.);

For some display devices, Gamma is introduced artificially to compensate the nonlinearity of the display. This Gamma appears as a Look-up Table (LUT). The luminance data read from the frame buffer is LUT converted, and then used for driving the display.

4. Display Gamma, referred to as $G_{Disp}$(.);

5. Encoder Gamma, referred to as $G_{Enc}$(.);

The Encoder Gamma refers to the Gamma caused due to the Discrete Cosine Transform (DCT) and quantization during compression.

6. Decoder Gamma, referred to as $G_{Dcc}$(.);

The Decoder Gamma refers to the Gamma caused by the inverse DCT and inverse quantization during decompression.

In the prior art, there are mainly two methods for implementing a correction:

Prior art 1:

The Gamma characteristics of the display are corrected depending on the Gamma characteristics of the video recorder/camera or display LUT completely.

Suppose that in an ideal situation: $G_{Cam}$(.) : $L_{out}= L_{in}^{0.45}$ ; $G_{LUT}$(.) : $L_{out}= L_{in}^{0.45}$ ; $G_{Disp}$(.) : $L_{out}=L_{in}^{2.2}$

Then: $G_{Cam}$ o $G_{Disp}$(.) becomes $L_{out}= L_{in}$, a standard linear relation is formed; and $G_{LUT}$ o $G_{Disp}$(.) becomes $L_{out}= L_{in}$, a standard linear relation is formed.

However, the technology described above has the following defects:

It is difficult to obtain the ideal situation, and an exact matching between the Video recorder/Camera Gamma or LUT Gamma and the Display Gamma cannot be guaranteed. Furthermore, there exist various displays. The Gamma of a low-cost camera is definitely not ideal. When $G_{Cam}$(.) and $G_{LUT}$(.) exist simultaneously, the nonlinearity is overcompensated, $G_{cam}$ o $G_{LUT}$ o $G_{Disp}$(.) becomes $L_{out}= L_{in}^{0.45}$, which deviates from the linearity. Furthermore, the mathematic model simulating the Gamma characteristics is not precise. Many researches indicate that the Display Gamma is not a simple power function. A more precise model may be a linear combination of a power function and a constant function, or may be a composition of a linear function and a power function.

Prior art II:

A Gamma correction element is inserted between certain elements, such as after the video recorder element or before the display frame buffer element, in order to perform Gamma correction. Furthermore, it is possible to adopt a more precise model with respect to the Gamma characteristics model of the display, such as Equation 3:

$$L_{out} = \begin{cases} \dfrac{1}{0.45} L_{in} & if \quad 0 \le L_{in} \le 0.081 \\ \dfrac{1}{1.099} (L_{in} + 0.099)^{2.2} & if \quad 0.081 < L_{in} \le 1 \end{cases} \tag{3}$$

Correspondingly, the video recorder Gamma is considered to match with the display Gamma completely, such as Equation 4:

$$L_{out} = \begin{cases} 0.45 L_{in} & if \quad 0 \le L_{in} \le 0.081 \\ 1.099 L_{in}^{0.45} - 0.099 & if \quad 0.081 < L_{in} \le 1 \end{cases} \tag{4}$$

The prior art II has the following defects.

The correction model is simple. However, the case in which a plurality of elements exists is very complicated. The Gamma characteristics of a plurality of elements cannot be obtained precisely, which will definitely lead to the result that correction cannot be performed precisely, i.e., the correction result is still nonlinear, even if a more precise model is used. Therefore, the issue of overcorrection or insufficient correction cannot be avoided. Furthermore, this method can only be used in specific cases, but not generally for the correction of any number of Gamma elements. EP1043885A2 discloses negotiation between first and second devices having a bi-directional communication link, so as to negotiate a low-cost image processing sequence that effects a transfer of image data from a first device to the second device. According to the negotiation, the devices determine whether functionality present in one device can be executed more efficiently in the other device, so as to increase image transfer efficiency and maintain good image quality. If functionality present in one device is more efficiently executed in the other device so as to achieve an overall increase in efficiency in the transfer of image data, then the functionality is transferred over the bi-directional communication link and the transfer of image data proceeds by incorporating the transferred functionality.

Summary of the Invention

The present invention provides a method for correcting Gamma characteristics through negotiation as set out in claim 1, in order to resolve the issue in the prior art that no general correction method is available for any number of Gamma characteristics elements in a two-party communication.

Furthermore, the present invention also provides a system as set out in claims 21 and 25 and a communication terminal for correcting the Gamma characteristics elements, with which the above method may be implemented.

A method for determining whether to perform the correction and selecting the first terminal or the second terminal as a correction-performing terminal includes:

selecting the first terminal to be the correction-performing terminal, when only the first terminal is able to perform the Gamma characteristics correction;

selecting the second terminal to be the correction-performing terminal, when only the second terminal is able to perform the Gamma characteristics correction;

selecting a terminal with a stronger processing capability currently from the first terminal or the second terminal to be the correction-performing terminal, when both terminals are able to perform the Gamma characteristics correction;

selecting a terminal randomly to be the correction-performing terminal, or selecting both terminals to be the correction-performing terminal to correct the Gamma characteristics of the far-end signal received from each other's respective far-end terminal or the Gamma characteristics of the far-end signal sent to the respective far-end terminal, when both terminals are able to perform the Gamma characteristics correction and the current processing capabilities thereof are equivalent; and

determining that no correction is to be performed, when neither terminal is capable of performing the Gamma characteristics correction.

The method further includes: determining, by the first terminal or the second terminal, local Gamma characteristics information respectively, and storing the Gamma characteristics information according to the following four categories:

Gamma characteristics information of category I: a Gamma path formed by all the cascaded Gamma characteristics elements sequentially passed through on a local terminal by a far-end signal that is sent to the far-end terminal by the local terminal as well as the corresponding equivalent model and parameters thereof;

Gamma characteristics information of category II: a Gamma path formed by all the cascaded Gamma characteristics elements sequentially passed through on the local terminal by a far-end signal that is received from the far-end terminal as well as the corresponding equivalent model and parameters thereof;

Gamma characteristics information of category III: a Gamma path formed by all the Gamma characteristics elements sequentially passed through on the local terminal by a local signal as well as the corresponding equivalent model and parameters thereof; and

Gamma characteristics information of category IV: a Gamma path formed by all the Gamma characteristics elements sequentially passed through by a local loopback signal as well as the corresponding equivalent model and parameters thereof.

The Gamma characteristics information of the far-end signal includes: Gamma characteristics information of category I of a signal transmitting terminal and Gamma characteristics information of category II of a signal receiving terminal; and the Gamma path of the far-end signal is formed according to a sequence that the Gamma path of category I is arranged before the Gamma path of category II.

The method further includes: performing, by a terminal selected from the first terminal or the second terminal that is able to perform the Gamma characteristics correction, correction on the Gamma characteristics of the local signal according to the Gamma characteristics information of category III, and or on the Gamma characteristics of the loopback signal according to the Gamma characteristics information of category IV.

According to the method, the direct negotiation between the first terminal and the second terminal includes:

sending, by the first tenninal, a negotiation request message for Gamma correction to the second terminal, in which the negotiation request message contains information about a current correction capability of the first terminal;

receiving, by the second terminal, the negotiation request massage for Gamma correction and returning a response message to the first terminal, in which if the correction-performing terminal is selected by the second terminal according to information of current correction capabilities of both terminals, information about the correction-performing terminal is contained in the response message; if it is determined by the second terminal that no Gamma characteristics correction is to be performed by both terminals, corresponding indication information is contained in the response message.

Furthermore, when the second terminal selects the first terminal to be the correction-performing terminal, and/or both terminals are selected to be the correction-performing terminal, the response message further includes the Gamma characteristics information of category I and II of the second terminal; and when the second terminal selects itself to be the correction-performing terminal, and/or both terminals are selected to be the correction-performing terminal, the first terminal sends its Gamma characteristics information of category I and II to the second terminal after receiving the response message.

The method further comprises: updating, by the first terminal or the second terminal, the Gamma characteristics information in time when the Gamma characteristics information varies during the communication, and using the Gamma characteristics information updated for correcting the Gamma characteristics of the local signal and/or loopback signal; and when the first terminal or the second terminal is the correction-performing terminal, sending, by a non correction-performing terminal, varied Gamma characteristics information to the correction-performing terminal in time for correcting the Gamma characteristics of the far-end signal; or when both terminals are the correction-performing terminal, the varied Gamma characteristics information of one terminal is sent to the other terminal in time respectively, for correcting the Gamma characteristics of the far-end signal.

According to the method, the process of performing a negotiation via the central server between the first terminal and the second terminal includes:

sending, by the first terminal and the second terminal, the current correction capability information to a central server respectively; and

determining, by the central server, whether the correction is to be performed and selecting the correction-performing terminal according to current correction capabilities of both terminals, and returning a result to the first terminal and the second terminal respectively.

Furthermore, the first terminal or the second terminal sends all the Gamma characteristics information to the central server before the communication or during the establishment of the communication, and the central server manages all the Gamma characteristics information with a dedicated database; the Gamma characteristics information is stored in the database according to a correspondence relation among ID information of the terminal, a category of the Gamma characteristics information, a cascaded path of this category as well as an equivalent model and parameters thereof respectively; and when the first terminal or the second terminal is the correction-performing terminal, the correction-performing terminal obtains the Gamma characteristics information of category I and category II of the non correction-performing terminal from the database for correcting the Gamma characteristics of the far-end signal; or when both terminals are the correction-performing terminal, the Gamma characteristics information of the corresponding far-end terminal is obtained from the database for correcting the Gamma characteristics of the far-end signal.

The method further includes: updating, by the first terminal or the second terminal, the Gamma characteristics information in time when the Gamma characteristics information varies during the communication, and using the Gamma characteristics information updated for correcting the Gamma characteristics of the local signal and/or loopback signal; and sending varied Gamma characteristics information to the central server in time for updating, or sending all the Gamma characteristics information to the central server for a complete replacement; and when the first terminal or the second terminal is the correction-performing terminal, sending, by the central server, received updated information of the non correction-performing terminal to the correction-performing terminal in time for correcting the Gamma characteristics of the far-end signal; or when both terminals are the correction-performing terminal, sending, by the central server, the updated Gamma characteristics information of one terminal to the other terminal in time, for correcting the Gamma characteristics of the far-end signal.

In the above method, the method for correcting the Gamma characteristics of the signal includes:

determining the Gamma path of the signal according the Gamma characteristics information of the signal, in which the total number of the Gamma characteristics elements included in the Gamma path is $N_t$;

determining a correction point in the Gamma path, in which the correction point divides $N_t$ elements into two parts: $N_a$ elements cascaded before the correction point and $N_p$ elements cascaded after the correction point, wherein $N_a \geq 0$, $N_p \geq 0$, and $N_a + N_p$ $N_t$;

establishing a first comprehensive equivalent model for the $N_a$ elements and determining a first inverse model thereof as well as establishing a second comprehensive equivalent model for the $N_p$ elements and determining a second inverse model thereof according to the Gamma characteristics equivalent model of each element and parameters thereof; and

establishing a correction element model according to the first inverse model and the second inverse model, determining a correcting signal for a final output signal of the $N_a$ elements with the correction element model, and inputting the correcting signal into the $N_p$ elements.

When the equivalent model of each element is represented in a function, the comprehensive equivalent model of the cascaded elements is a corresponding composition function, and a representation function of the inverse model is an inverse function of the composition function; and

When the comprehensive equivalent model is represented in a data table, the corresponding inverse model is an inverse table of the data table.

When the equivalent model is represented in the function, a method for establishing the correction element model includes:

a direct calculation method, in which the correcting signal for the final output signal of the $N_a$ elements is calculated in real time with the composition function of the function of the first inverse model and that of the second inverse model;

a two-step calculation method, in which a first correcting signal for the final output signal of the $N_a$ elements is calculated in real time with the function of the first inverse model, then a second correcting signal of the first correcting signal is calculated with the function of the second inverse model, and the second correcting signal is used as the correcting signal; or

a look-up table method, in which correction values corresponding to a plurality of sample values in the range of the final output values of the $N_a$ elements are calculated in advance according to the direct calculation method or the two-step calculation method, and a correspondence relation is saved in a data table, and then the correction value for any value to be corrected may be obtained via querying the data table in real time;

when the equivalent model is represented in the data table, the look-up table method is used for determining, the correction value for any value to be corrected.

When the equivalent model is represented in the function, a process of determining, by the first terminal or the second terminal, the equivalent model of each Gamma characteristics element on the first terminal or the second terminal and the parameters thereof comprises:

M1. detecting respectively N values $L^P_{out}(i)$ of an actual output signal generated through inputting N sample values $L_{in}(i)$ of an input signal into the element, wherein $0 \leq i \leq N-1$;

M2. selecting a model to be detected from a set of candidate equivalent models represented in functions, and then executing M3;

M3. selecting a set of initial parameters for the model to be detected;

M4. performing calculation:

calculating N values $L^M_{out}(i)$ of a theoretical output signal corresponding to the N sample values according to the model to be detected, wherein $0 \leq i \leq N-1$; and

calculating an object function value F, wherein the object function value F is relevant to a difference of each pair of corresponding $L^P_{out}(i)$ and $L^M_{out}(i)$;

M5. determining whether the object function value F is equal to or smaller than a configured threshold value; if yes, it is determined that the model to be detected is accepted as a final equivalent model, and parameters corresponding to a minimum object function value F are taken as parameters of the equivalent model, then turning to M8; otherwise, executing M6;

M6. determining whether the number of the execution of M4 reaches a defined iteration number; if yes, another equivalent model is selected from candidate equivalent models that are not detected as a model to be detected, and then returning to M3; otherwise, executing M7;

M7. adjusting the parameters of the model with a mathematical optimum method, and then returning to M4;

M8. ending.

In the M5, when the object function value F is equal to or smaller than the configured threshold value, the parameters are adjusted with the mathematical optimum method according to the configured iteration number, and the object function value F is calculated, then the parameters corresponding to the minimum object function value F is taken as the parameters of the equivalent model.

The object function value F satisfies the following condition:

$$F = \sum_{i=0}^{N-1} (L^P_{out}(i) - L^M_{out}(i))^2$$

The functions of the set of candidate equivalent models represented in functions and the corresponding inverse functions thereof are as follows:

the function of the Gamma characteristics equivalent model is: $L_{out} = pL_{in}{}^{\alpha} + (1-p)$, wherein a domain of definition of the function is an interval $[0, 1]$, and a range of values is an interval $[(1-p), 1]$; then the inverse function of this function is $L_{out} = (\frac{1}{p} L_{in} + (1 - \frac{1}{p}))^{\frac{1}{\alpha}}$ or

the function of the Gamma characteristics equivalent model is: $L_{out} = (qL_{in} + (1-q))^{\frac{1}{\beta}}$, wherein the domain of definition of the function is the interval $[1-1/q, 1]$, and the range of values is the interval $[0, 1]$; then the inverse function of this function is:

$$L_{out} = \frac{1}{q} L_{in}{}^{\beta} + (1 - \frac{1}{q})$$ ;

$L_{in}$ is a value of an input signal, Lout is a value of an output signal, p and a as well as q and β are parameters to be measured respectively; and when $N_a = 1$ or $N_p = 1$: $0 < p \leq 1$, $\alpha \geq 1$, $q \geq 1$, $\beta \geq 1$; and when $N_a > 1$ or $N_p > 1$: $0 < p \leq 1$ $\alpha \geq 0$, $q \geq 1$, $\beta \geq 0$.

The mathematical optimum method is: hill climbing method, 0.618 method, steepest descent method or conjugate gradient method.

The N sample values of the input signal are selected from the interval $[0, 1]$.

A correction system for correcting Gamma characteristics of a luminance signal communicated between a first terminal and a second terminal through negotiation between the first and the second terminal, wherein the first terminal and the second terminal are the far-end terminal corresponding to each other respectively, each of the first terminal and the second terminal comprises at least one Gamma characteristics elements passed through by the luminance signal and causing a distortion of the Gamma characteristics of the luminance signal, wherein the correction system further comprises: a correction module for Gamma characteristics arranged on the first terminal, the second terminal and a central server module connected with the correction module via communication;

the correction module is adapted to detect and save Gamma characteristics information on a local terminal which is the first terminal or the second terminal, and send the Gamma characteristics information to the central server module before the communication is established; and is adapted to correct Gamma characteristics of the luminance signal exchanged according to the Gamma characteristics information of the far-end terminal corresponding to the local terminal and/or that of the local terminal during the communication; wherein the Gamma characteristics information is obtained from the central server module or sent initiatively by the central server module, and comprises a Gamma path formed by all the sequentially cascaded Gamma characteristics elements that are passed through by the luminance signal as well as an equivalent model of Gamma characteristic corresponding to each Gamma characteristics elements and parameters thereof.

The terminal further includes: a communication interface module, which is connected between the correction module and the central server module, and is adapted to provide a communication interface for the correction module and to receive/transmit the Gamma characteristics information exchanged between a local correction module and the central server module or between the local correction module and a far-end correction module; and

the communication interface module is further adapted to exchange Gamma characteristics correction capability information of both terminals involved in correction with the far-end terminal in the communication directly, and determine whether the correction is to be performed and select a correction -performing terminal; or the communication interface module is adapted to forward a determination about whether the correction is to be performed made by the central server module and/or information about the correction-performing terminal selected according to correction capabilities of both terminals as well as the Gamma characteristics information of the far-end te rminal in the communication to the correction module.

The correction module includes:

a detection sub-module, adapted to detect the Gamma characteristics information, wherein the Gamma characteristics information comprises the Gamma path formed by all the sequentially cascaded local Gamma characteristics elements as well as the equivalent model corresponding to each Gamma characteristics elements and parameters thereof;

a storage sub-module, adapted to store the Gamma characteristics information of the local terminal and that of the far-end terminal;

an execution sub-module, adapted to construct a correction element module according to the Gamma characteristics information of the local terminal and/or that of the far-end terminal; and

a correction element, adapted to correct the Gamma characteristics of the communication signal according to the correction element module.

Wherein the correction element comprises one of the following elements or any combination thereof:

a first correction sub-element, adapted to correct the Gamma characteristics of a far-end signal;

a second correction sub-element, adapted to correct the Gamma characteristics of a local signal; and

a third correction sub-element, adapted to correct the Gamma characteristics of a loopback signal.

The beneficial effects of the present invention are as follows:

1. According to the present invention, with respect to various complex situations during a two-party video communication, a general method for correcting the Gamma characteristics through negotiation is provided. When both terminals of the communication have a correction processing capability, the terminal with a stronger capability is selected to perform the correction, so that the utilization of system resources may be optimized. The method is independent on specific communication protocols and may be implemented by extending or modifying relevant messages for the protocols such as H.320, H.323, SIP, WCDMA/CDMA2000/TD-SCDMA and MMS.

2. With the terminal structure according to the invention, the Gamma characteristics information for correction on the local terminal may be detected and saved. The Gamma characteristics path may be constructed with the local Gamma characteristics and used for correcting the Gamma Characteristic of the communication signal, such as the local signal, loopback signal, and far-end signal.

3. The invention further provides a correction system constituted with a central server in the terminal communication network, in order to realize a centralized management of the correction information and the negotiation process, so that the utilization of the system resources may be further optimized.

4. The method, system and terminal for correcting Gamma characteristics through negotiation according to the invention may be conveniently used for correcting the Gamma characteristics of the exchanged signal between any two terminals in the multi-party communication, so that the signal quality in the communication network may be improved.

Brief Description of the Drawings

Figure 1 is a diagram showing a general model of the Gamma characteristics of a single element;

Figure 2 is a diagram showing a general model of the Gamma characteristics of a plurality of cascaded elements;

Figure 3 is a schematic diagram of correcting the Gamma characteristics of a single element;

Figure 4 is a schematic diagram of correcting the Gamma characteristics of a plurality of specified elements;

Figure 5 is a schematic diagram showing the Gamma elements involved in a two-party video communication;

Figure 6 is a schematic diagram showing the structure of a system for correcting the Gamma characteristics through negotiation according to the invention, in which terminal A and terminal B are taken as an example for illustration;

Figure 7 is a schematic diagram showing the main structure of a communication terminal in a method for correcting the Gamma characteristics through negotiation according to the invention; and

Figure 8 is a schematic diagram showing a specific structure of the correction elements shown in Figure 7.

Detailed Description of the Embodiments

In a video communication, there exists a plurality of cascaded elements within a terminal, and each element has a Gamma characteristics. At present, there is no general method for implementing Gamma correction for processes from an optical signal entering a video recorder/camera until a display displaying still image or video. Therefore, no general solution is provided for the video quality degradation caused by the Gamma issue. Meanwhile, the Gamma characteristics parameters of different terminals are unknown to each other. Thus, the issue of how to implementing Gamma correction after a video transferred from terminal A to terminal B is still not resolved.

As shown in Figure 5, the following three still image or videos are involved in a communication between two terminals:

1. Local still image or video;

2. Loopback still image or video;

3. still image or video exchanged between the two terminals.

The local still image or video, far-end still image or video and loopback still image or video stated above pass through different Gamma elements, and in a practical case, the situation of the Gamma element actually involved may be even more complicated. Nevertheless, (an optical signal of) the still image or video enters the system via the video recorder/camera, passes through each Gamma elements in sequence until reaching the display, in which the optical signal is obtained again. These Gamma elements constitute a Gamma path according to this sequence. Please refer to Figure 4, a commonness of these Gamma paths is that there are one or more points in each path where a Gamma correction elements may be inserted. Such point is called correction possibility point.

Hereinafter, a method is introduced, in which the Gamma characteristics of a correction element in a Gamma path are employed. This method is a way of implementing the present invention, which includes:

1. determining a cascading path of Gamma characteristics elements relevant to a signal, when the number of elements contained in this cascading path is $N_t$;

2. determining a correction point in the cascading path while this correction point divides the $N_t$ elements into two parts: $N_a$ elements cascaded before the correction point and $N_p$ elements cascaded after the correction point, where $N_a \geq 0$, $N_p \geq 0$, and $N_a + N_p = N_t$;

3. establishing a first comprehensive equivalent model for the $N_a$ elements and a second comprehensive equivalent model for the $N_p$ elements according to a Gamma characteristics equivalent model of each element and parameters thereof;

4. determining a first inverse model of the first comprehensive equivalent model and a second inverse model of the second comprehensive equivalent model;

5. establishing a correction element model according to the first inverse model and the second inverse model, determining a correcting signal for a final output signal of the $N_a$ elements with the correction element model, and inputting the correcting signal into the $N_p$ elements.

According to this method, the following methods may be adopted for establishing the correction element model:

Direct calculation method, in which the correcting signal for the final output signal of the $N_a$ elements is calculated in real time with a composition function constituted with the function of the first inverse model and that of the second inverse model;

Two-step calculation method, in which a first correcting signal for the final output signal of the $N_a$ elements is calculated in real time with the function of the first inverse model, then a second correcting signal of the first correcting signal is calculated with the function of the second inverse model, and the second correcting signal is used as the correcting signal; and

According to the Look-up table method, correction values corresponding to a plurality of sample values in the range of the final output values of the $N_a$ elements are calculated in advance according to the direct calculation method or the two-step calculation method, and the correspondence relation is saved in a data table. The correction value for any value to be corrected may be obtained via querying the data table in real time.

For a model in which the data table is adopted, there is no analytic form for the equivalent model itself (for example, when the model is realized with the look-up table method, the inverse function thereof certainly does not have an analytic form), then the inverse model is an inverse table of the data table. A table includes two columns and several rows. The left column (input column) contains sample values of the input signal, i.e., signal values to be corrected, and the right column (output column) contains corresponding output signal values, i.e., corrected signal values. The number of the row depends on the number of sampling points. The larger the number of the rows is, the more precise the sampling is. The inverse table is a new data table obtained by exchanging the left and the right columns. For video data containing a large data volume, the load of performing real time calculation is very heavy. Therefore, the look-up table method is the most practicable way.

The premise for using the method described above is that the terminal should be able to determine all the Gamma characteristics elements on this terminal itself. When the equivalent model is represented in a function, the sending terminal or receiving terminal determines respectively the equivalent model or parameters thereof for each Gamma characteristics element on the sending terminal or receiving terminal itself via steps described in the following. The equivalent model of the Gamma characteristics element provided here and the method for detecting the parameters thereof are only an embodiment for implementing the method according to the invention, which is not intended to restrict the protection scope of the present invention.

The method for determining, by the terminal, the equivalent model of each Gamma characteristics element and for detecting the parameters of the equivalent model includes the following steps:

First, a set of general equivalent models of the Gamma characteristics of an individual element is taken as an example:

The first Gamma model:

$$L_{out} = pL_{in}{}^{\alpha} + (1-p) \quad 0 < p \le 1, \alpha \ge 1 \tag{1}$$

The domain of definition, i.e. the value range of independent variables, of the function represented by Equation 1 is interval [0, 1], and the range of values, i.e. the value range of function values, is interval [(1-p), 1].

The second Gamma model:

$$L_{out} = (qL_{in} + (1-q))^{\frac{1}{\beta}} \quad q \ge 1, \beta \ge 1 \tag{2}$$

The domain of definition, i.e. the value range of the independent variables, of the function represented by Equation 2 is range [1-1/q, 1], and the range of values, i.e. the value range of the function values, is range [0, 1].

After that, one model selected from above is taken as the model to be detected, and the following steps are performed:

1. For the input luminance signal $L_{in}$, N sampling points with an uniform interval are selected in the range [0, 1]: $L_{in}(0)$, $L_{in}(1)$, $L_{in}(2)$...... $L_{in}(i)$...... $L_{in}(N-2)$, $L_{in}(N-1)$;

2. The N sample values of the luminance signal are respectively input into the elements, and N corresponding values of the luminance signal that are actually output are measured: $L^P_{out}(0)$, $L^P_{out}(1)$, $L^P_{out}(2)$......$L^P_{out}(1)$-....:$L^P_{out}(N-2)$, $L^P_{out}(N-1)$;

3. A fitting object function is constructed. The object function is relevant to the difference between the output luminance signal actually detected and the theoretical output luminance signal determined through the Gamma characteristics model. The smaller the difference is, the better the equivalent effect of the model fits the practical situation.

There is a plurality of methods for constructing the object function. The following Equation 3 or Equation 4 is usually used:

$$F_{T1}(p,\alpha) = \sum_{i=0}^{N-1} (L^P_{out}(i) - pL_{in}(i)^{\alpha} - (1-p))^2 \tag{3}$$

or,

$$F_{T2}(q,\beta) = \sum_{i=0}^{N-1} (L^P_{out}(i) - (qL_{in}(i) + (1-q))^{\frac{1}{\beta}})^2 \tag{4}$$

4. The threshold T of the value of the object function and the maximum iteration number are configured, and a mathematical optimum method is adopted to find the most suitable parameter set.

First, for the first cost function $F_{T1}(p,\alpha) = \sum_{i=0}^{N-1}(L_{out}^P(i) - pL_{in}(i)^\alpha - (1-p))^2$ , a mathematical optimum technology is adopted for obtaining the minimum value, such as hill climbing method. 0.618 method (Hua Luogeng optimization method), steepest descent method and conjugate gradient method.

Actually, this process is an iteration process. During the process, parameters p and $\alpha$ arc adjusted continuously, and the function value decreases continuously. When the function value decreases to be smaller than the given threshold T, it is considered that the minimum point is found. The corresponding parameters p and $\alpha$ at this time are considered to be the real parameters of the model for the current application environment.

When after M iterations, the function value of $F_{T1}(p,\alpha) = \sum(L_{out}^P(i) - pL_{in}(i)^\alpha - (1-p))^2$ still cannot be smaller than the threshold T, it is considered that the model is not selected correctly, and the second model should be used. Therefore, the above step 4 is repeated for $F_{T2}(q,\beta) = \sum_{i=0}^{N-1}(L_{out}^P(i) - (qL_{in}(i) + (1-q))^{\frac{1}{\beta}})^2$ , and the corresponding model parameters q and $\beta$ are obtained. It should be noted that the value ranges of the parameters q and $\beta$ are $q \geq 1$ and $\beta \geq 1$ respectively.

When more precise parameters are to be obtained, more iteration may be performed after the value of the object function F falls below the threshold T. The value of the object function F may decrease continuously, decrease first and then increase, or increase directly. No matter how the value of the object function F varies, parameters corresponding to the minimum values are selected to be the measurement result. Thus, the precision of the parameter measurement may be increased to a certain extent.

Therefore, the determination of the model type and the measurement of the parameters are performed simultaneously. In practice, there are not only two forms with respect to the type of the equivalent model. With the method described above, the most suitable model may be found in all the relevant equivalent models via measuring the parameters.

As shown in Figure 5, the local still image or video, far-end still image or video and loopback still image or video are involved in the communication between the two terminals. With respect to terminal A, the specific Gamma paths passed through are as follows respectively:

I. Gamma path of the local still image or video:

$G^{(A)}_{cam}(.) \rightarrow G^{(A)}_{FBut}(.) \rightarrow G^{(A)}_{LUT}(.) \rightarrow G^{(A)}_{Disp}(.)$, where the superscript (A) denotes terminal A, the possible correction point in this path may be between $G_{cam}(.)$ and $G_{FBut}()$, or between $G_{FBuf}(.)$ and $G_{LUT}(.)$.

II. Gamma path of the loopback still image or video:

$G^{(A)}_{Cam}(.) \rightarrow G^{(A)}_{Enc}(.) \rightarrow G^{(A)}_{Dcc} \rightarrow G^{(A)}_{FBut} \rightarrow G^{(A)}_{LUT}(.) \rightarrow G^{(A)}_{Disp}(.)$, where the possible correction point in this path may be between $G^{(A)}_{Cam}(.)$ and $G^{(A)}_{Enc}(.)$, between $G^{(A)}_{Dec}$ and $G^{(A)}_{FBuf}(.)$ or between $G^{(A)}_{FBuf}$ and $G^{(A)}_{LUT}(.)$.

III. The following two types are included for the far-end still image or video:

1. Gamma path of the still image or video sent to the far-end terminal:

$G^{(A)}_{Cam}(.)G^{(A)}Enc(.) \rightarrow G^{(B)}_{Dcc} \rightarrow G^{(B)}FBuf \rightarrow G^{(B)}_{LUT}(.) \rightarrow G^{(B)}_{Disp}(.)$, in which the subscript (B) denotes terminal B, and the possible correction point in this path may be between $G_{Cam}(.)$ and $G_{Enc}(.)$.

2. Gamma path of the still image or video received from the far-end terminal:

$G^{(B)}_{Cam}(.) \rightarrow G^{(B)}_{Enc}(.) \rightarrow G^{(A)}_{Dcc} \rightarrow G^{(A)}_{FBuf} \rightarrow G^{(A)}_{LUT}(.) \rightarrow G^{(A)}_{Disp}(.)$, in which the possible correction point in this path may be between $G^{(A)}_{Dec}(.)$ and $G^{(A)}_{FBuf}(.)$, or between $G^{(A)}_{FBuf}$ and $G^{(A)}_{LUT}(.)$.

The Gamma path of the far-end signal includes the following two parts: a Gamma path passed through by the signal on the sending terminal and a Gamma path passed through by the signal on the receiving terminal.

In practice, some enhanced processing function not available at present may be introduced into the terminal in the future due to the development of the terminal technology, so that a new processing element may be introduced, or some elements may not be required. Therefore, the number of elements in the path may be increased or decreased. Although changes may happen in the path itself, the method according to the invention is still applicable.

Furthermore, for the still image or video from terminal A to terminal B, it is possible that the correction may be performed by terminal A according to the path 1 described above, or the correction may be performed by terminal B according to the path 2. However, the correction only needs to be performed once. If the correction is performed on both terminals, the result will be incorrect. Because the correcting capabilities of both terminals may be different, the terminal with a stronger capability should be selected to perform the specific correction, or when the capabilities of both terminals are equivalent, each terminal performs correction for the respective far-end signal, so as to optimize the utilization of system resources. The present invention provides a method in which the two terminals may negotiate to determine the terminal for performing correction.

The specific implementation of the method for correcting Gamma characteristics through negotiation provided by the invention includes the following aspects:

I. Establishing a negotiation strategy.

Strategy 1. For the local still image or video and loopback still image or video, because only the terminal itself is involved, no negotiation is required, and correction is performed by the terminal itself.

For the far-end still image or video, the two terminals negotiate according to principles described hereinafter and determine the terminal that performs correction finally:

Strategy 2. If both terminal A and terminal B are able to perform correction, the terminal with a stronger processing capability or the terminal whose current burden of processing task is slighter (the terminal may be a PC that processes multi tasks simultaneously) is selected to perform correction;

Strategy 3. If both terminal A and terminal B are able to perform correction, and the processing capabilities of them are equivalent or the burdens of processing tasks are equivalent, a terminal is selected randomly to perform correction. Alternatively, both terminals are the correction-performing terminal and correct respectively a far-end signal received from the far-end terminal or a far-end signal sent to the far-end terminal.

There is a plurality of methods to perform random selection. For example, a random number may be used. Any one of the two terminals may generate a random number, and if the random number is an even number, terminal A is to perform correction; otherwise, terminal B is to perform correction. Alternatively, terminal A and B generate respectively a random number, and the two random numbers are added. If an even number is obtained through addition, terminal A is to perform correction; otherwise, terminal B is to perform correction. Alternatively, terminal A and B generate respectively a random number in a certain range, such as between 0 and 99999 or within range [0, 1]. The terminal that generates a larger random number may perform correction. There are also many analogous methods, which are known to those skilled in the art and will not be described again here.

Strategy 4. If a terminal cannot perform correction, the other one is selected to perform correction.

Strategy 5. If both terminals cannot perform correction, no correction will be performed.

Furthermore, according to the application situation, a process of determining whether the Gamma correction is required as well as a process of determining the balance between the precision of Gamma correction to be achieved and the calculation load (the result obtained through function calculation is more precise, but the calculation load is heavier, in contrast, the result obtained through look-up table is simpler, but the precision is lower) may be involved during the process of negotiation.

During the process of determining the processing capability of a terminal, the processing capability of the terminal, such as the basic frequency of CPU/DSP, instruction length, whether parallel processing and/or ultra-long instruction set are/is supported, is contained in the data packet to be exchanged. Meanwhile, the terminal is able to detect the processing load of itself, such as the occupation rate of the CPU and media processing chip. Such data can also be exchanged. If such data is shared by the two terminals, the execution terminal can be determined through comparison.

II. The negotiation process for correcting the far-end still image or video

For a specific communication protocol, this process may be implemented through a user-defined section of the current protocol or an extension of the existing protocol. For example, for a video communication based on Session Initiation Protocol (SIP), this process may be implemented through extending the SIP protocol. Whereas for a video communication based on H.323, this process may be implemented through extending the capability negotiation message of the H.245 protocol, or may be implemented through extending the H.460 and defining a new H.460 mechanism. The specific processes for extending and defining a protocol are known to those skilled in the art and will not be described again here.

Whichever the protocol environment is, before the communication or during the establishment of the communication, terminal A and B determine through negotiation whether the correction is to be performed and which terminal is to perform the correction according to correction capability information of both terminals in communication. If the correction is to be performed, one terminal is selected to be the correction-performing terminal for the Gamma characteristics of far-end signals on both terminals and performs correction. If both terminals are not able to perform correction, no correction will be performed.

Generally, the implementation of the negotiation process includes the following two methods:

Method I. The terminal stores the negotiation strategy and performs negotiation directly. This method includes the following steps:

Step I: Terminal A sends a negotiation request message for Gamma correction to terminal B. The negotiation request message contains information about whether terminal A is able to perform correction and the current processing capability. In the invention, this information is generally called correction capability information of the terminal.

Step II: Terminal B receives the negotiation request massage and selects the correction-performing terminal for far-end signals according to current correction capabilities of both terminals. Then the selection result is carried in a response message and returned to terminal A. The selecting method is specifically as follows:

1. If only terminal A is able to perform Gamma characteristics correction, terminal A is selected to be the correction-performing terminal;

2. If only terminal B is able to perform Gamma characteristics correction, terminal B is selected to be the correction-performing terminal;

3. Ifboth terminals are able to perform Gamma characteristics correction, the terminal with a stronger processing capability currently is selected to be the correction-performing terminal;

4. If both terminals are able to perform Gamma characteristics correction and the current processing capabilities are equivalent, one terminal is selected randomly to be the correction-performing terminal. Alternatively, both terminals are selected to be correction-performing terminals and correct respectively the Gamma characteristics of the far-end signal received from the far-end terminal or the Gamma characteristics of the far-end signal sent to the far-end terminal;

If both terminals are not able to perform Gamma characteristics correction, it is selected that no correction will be performed.

Step III: When the correction-performing terminal is determined, the correction-performing terminal corrects the Gamma characteristics of the far-end signal according to the Gamma characteristics information of the far-end signal. The Gamma characteristics information includes cascaded Gamma path of all Gamma characteristics elements sequentially passed through by the signal on both communication terminals as well as the equivalent model corresponding to each Gamma characteristics element and parameters thereof.

Step IV: When no correction-performing terminal is selected, neither terminal A nor terminal B performs correction on the signal.

The specific correcting method may be selected to be the implementing method described above. However, it should be noted that the above implementing method is only a specific embodiment of the method for correcting Gamma characteristics through negotiation according to the invention, which is not intended to restrict the protection scope of the invention.

Method II. A third party stores the negotiation strategy and performs determination. The specific implementation includes the following steps:

Step I: Terminal A and terminal B respectively send their current correction capability information to a third party, such as a central server.

Step II: The central server determines whether to perform correction and selects a correction-performing terminal according to the current correction capabilities of both terminals, and returns the result to terminal A and B respectively.

In this method, the correction strategy is the same as that in the previous method. The difference is that the correction strategy is stored on the central server, and the central server performs determination according to the current capabilities of both terminals, and returns the result to terminal A and B.

Step III: Terminal A and B determine respectively subsequent operations according to the result received. If a terminal is selected to be the correction-performing terminal, it performs correction. If both terminals do not have the correction capability, no correction will be performed for the Gamma characteristics of the communication signal.

In the above method, after the correction-performing terminal is determined, the correction-performing terminal needs to determine the sequentially cascaded path of all the Gamma characteristics elements passed through by the signal as well as the equivalent model of each corresponding Gamma characteristics element and parameters thereof, which are referred to as Gamma characteristic information. The simplest method is that each terminal may store the Gamma characteristic information of the terminal itself according to classification based on the following four categories, so as to facilitate the execution of the correction:

Category I: a cascaded path of all the Gamma characteristics elements sequentially passed through on the local terminal by a signal that is sent to the far-end terminal by the current terminal as well as the corresponding equivalent model and parameters thereof;

Category II: a cascaded path of all the Gamma characteristics elements sequentially passed through on the local terminal by a signal that is received from the far-end terminal by the local terminal as well as the corresponding equivalent model and parameters thereof;

Category III: a cascaded path of all the Gamma characteristics elements sequentially passed through on the local terminal by a local signal as well as the corresponding equivalent model and parameters thereof;

Category IV: a cascaded path of all the Gamma characteristics elements sequentially passed through on the local terminal by a loopback signal of local terminal as well as the corresponding equivalent model and parameters thereof.

Thus, the Gamma characteristics information of a far-end signal includes: Gamma characteristics information of category I of the signal transmitting terminal and Gamma characteristics information of category II of the signal receiving terminal. Additionally, the Gamma path of the far-end signal is formed according to a sequence that the path of category 1 is arranged before the path of category II.

There may be two methods with which a correction-performing terminal obtains Gamma characteristics information about a far-end signal from a far-end terminal, according to different negotiation processes described above:

Corresponding to the method in which the terminal performs negotiation directly, the Gamma characteristics information is transmitted between the terminals directly.

specifically, when terminal B selects terminal A to be the correction-performing terminal, or both terminals are correction-performing terminals, the Gamma characteristics information of category I and category II of terminal B is directly contained in a response message sent to terminal A. When terminal B selects itself to be the correction-performing terminal, or both terminals are correction-performing terminals, terminal A sends the Gamma characteristics information of category I and category II of tenninal A to terminal B after receiving the response message.

Furthermore, in order to ensure the correctness of the correction result during the whole communication, terminal A or terminal B needs to update its Gamma characteristics information in time when the Gamma characteristics information on terminal A or terminal B is changed during the communication, and the updated Gamma characteristics information is used for correcting the local signal and/or loopback signal. When one terminal is the correction-performing terminal, the non correction-performing terminal sends the changed Gamma characteristics information to the correction-perfonning terminal in time for correcting the far-end signal. When both terminals are correction-performing terminals, the changed Gamma characteristics information is sent to the far-end terminal in time respectively for correcting the far-end signals.

Corresponding to the method in which the central server is used for determination, the central server is still used for exchanging the Gamma characteristics information.

Specifically, before a communication or during the process of establishing the communication, terminal A or terminal B sends all the Gamma characteristics information of its own to the central server respectively, and the central server uses a dedicated database to manage the Gamma characteristics information. The Gamma characteristics information is stored in the database according to the correspondence relation among the ID information of the terminal, the category of the Gamma characteristics information, the cascaded path of this category as well as the equivalent model and parameters thereof respectively. Furthermore, when one terminal is the correction-performing terminal, the correction-performing terminal obtains Gamma characteristics information of category I and category II of the non correction-performing terminal from the database for correcting the far-end signal, before the correction is performed. Alternatively, when both terminals arc correction-performing terminals, the Gamma characteristics information of category I and category II of far-end terminals is obtained from the database respectively for correcting the far-end signal.

Similarly, in order to ensure the correctness of the correction result during the whole communication, terminal A or terminal B needs to update its Gamma characteristics information in time when the Gamma characteristics information on the terminal is changed during the communication, and the updated Gamma characteristics information is used for correcting the local signal and/or loopback signal. Furthermore, the changed Gamma characteristics information is sent to the central server in time for updating. Alternatively, all the Gamma characteristics information is resent to the central server for a complete replacement. When one terminal is the correction-performing terminal, the central server sends the received updated information of category I and category II of the non correction-performing terminal to the correction-performing terminal in time for correcting the far-end signal. When both terminals are correction-performing terminals, the central server sends the Gamma characteristics information of category I and category II updated by one terminal to a far-end terminal in time for correcting the far-end signal.

With the above method in which a central server is used, a complete negotiation correction system is established. The system will be described hereinafter in detail.

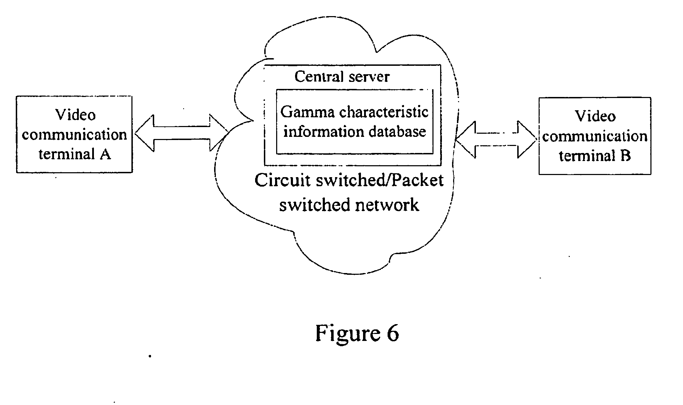

Figure 6 shows a negotiation correction system for Gamma characteristics according to the invention. The Gamma characteristics of a far-end still image or video signal between correction terminals A and B is taken as an example. Each terminal includes at least one Gamma characteristics elements and a communication interface module for communication, and the terminals implement communication via a packet switched/circuit switched network.

The communication interface module is connected between a correction module and a central server, and is adapted to receive/transmit the Gamma characteristics information exchanged between the correction module of the local terminal and the central server module or between the correction module of local terminal and the correction module of a far-end terminal in communication. Furthermore, the communication interface module exchanges correction capability information of both terminals involved in correction with the far-end terminal, and performs a correction negotiation, so as to determine whether the correction is to be performed and select the correction-performing terminal. Alternatively, the communication interface module forwards the determination made by the central server module according to correction capabilities of both terminals to the correction module.

The correction module detects and saves the Gamma characteristics information of the local terminal, and sends the Gamma characteristics information to the central server module before the communication is established. During the communication, the correction module performs Gamma characteristics correction for the exchanged signal according to the Gamma characteristics information of the terminal on which the correction module is located and/or Gamma characteristics information of the far-end communication terminal that is obtained from the central server module or is sent by the central server module initiatively.

Some parameters of the Gamma characteristics elements may vary with time. For example, during the communication, the display mode of the display may change from 256 colors to 65536 colors. Such change may influence the Gamma characteristics. Furthermore, the rate control and quantization factor used by the still image or video encoder may also vary with time (the network bandwidth is changed, therefore these parameters may also vary), so that the variation of parameters of the Gamma characteristics may be caused. The far-end terminal should be informed of such variation in time, so that an appropriate correction may be performed. The Gamma characteristics information stored in the database should be updated in time. Therefore, the terminal sends all the Gamma characteristics information to the central server when the communication starts. The central server stores the Gamma characteristics information in the database according to the correspondence relation among the ID information of the terminal, the category information of the path as well as each corresponding equivalent model and parameters thereof. Furthermore, the varied Gamma characteristics information is sent to the database for updating in time during the communication. Alternatively, when the Gamma characteristics information varies, all the Gamma characteristics information is resent to the database for a complete replacement.

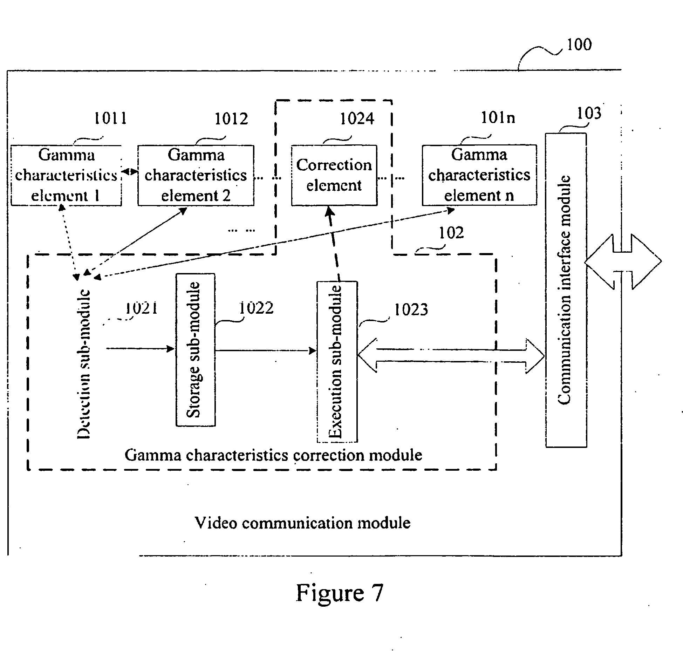

Figure 7 is a schematic diagram showing the main structure of a communication terminal for implementing the above method according to the invention. The communication terminal 100 mainly includes: n cascaded Gamma characteristics elements 101 (1011, 1012, ..., 101n), a Gamma characteristics correction module 102 and a communication interface module 103.

The communication interface module 103 performs correction negotiation with the far-end communication terminal and selects the correction-performing terminal, and forwards the negotiation result of whether performing correction and/or information about the selected correction-performing terminal as well as the Gamma characteristics information of the far-end communication terminal to the correction module 102.

The correction module 102 corrects the Gamma characteristics of the communication signal according to the Gamma characteristics information of the local terminal and/or the Gamma characteristics information of the far-end terminal.

Specifically, the correction module 102 includes:

a detection sub-module 1021, which is connected with each Gamma characteristics elements 101 (1011, 1012, ..., 101 n) on the local terminal, and is adapted to detect the Gamma characteristics of each Gamma characteristics elements on the local terminal;

a Gamma characteristics storage sub-module 1022, which is connected with the detection sub-module, and is adapted to store the Gamma characteristics information detected by the detection sub-module 1021;

an execution sub-module 1023, which is connected between the storage sub-module and the communication interface module, and is adapted to correct the Gamma characteristics of the communication signal and establish a correction element module according to the Gamma characteristics information received from the communication interface module and/or obtained from the storage sub-module on the local terminal; and

a correction element 1024, which is serially connected between two Gamma elements selected in the Gamma characteristics path of the communication terminal, and is adapted to correct the Gamma characteristics of the communication signal according to the correction element module.

The specific location of the correction element 1024 is the point where the correction is to be executed. The communication interface module 103 may be realized with an available communication interface on the terminal, or may be independently configured as a dedicated correction communication interface.

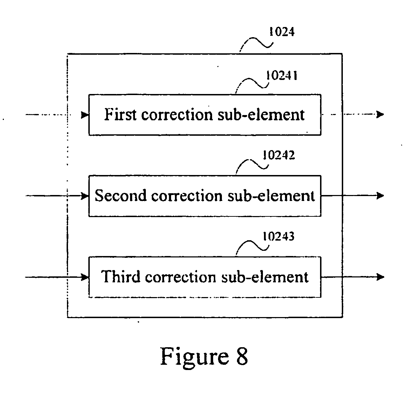

As shown in Figure 8, the correction element 1024 includes:

a first correction sub-element 10241, adapted to correct the Gamma characteristics of the far-end signal, and the correction module is established according relevant Gamma characteristics information of local terminal and the far-end terminal;

a second correction sub-element 10242, adapted to correct the Gamma characteristics of the local signal, and the correction module is established according relevant Gamma characteristics information of local terminal;

a third correction sub-element 10243, adapted to correct the Gamma characteristics of the loopback signal, and the correction module is established according relevant Gamma characteristics information of local terminal.

According to the practical application, the correction element 1024 may refer to one of the above three sub-elements or any combination thereof.

Compared with the method in which the Gamma characteristics information is exchanged directly between the terminals, the method of using the central server makes the centralized management easier, and it can be avoided that the quality of the communication signal is influenced due to the frequent negotiation processes or exchanges of the Gamma characteristics information between the terminals.

Additional advantages and modifications will readily occur to those skilled in the art. Therefore, the invention in its broader aspects is not limited to the specific details and representative embodiments shown and described herein. Accordingly, various modifications and variations may be made without departing from the scope of the invention as defined by the appended claims.

**Claims**

1. A method for performing a Gamma characteristics correction of a luminance signal communicated between a first terminal and a second terminal, wherein the first terminal and the second terminal are the far-end terminal corresponding to each other respectively, each of the first terminal and the second terminal comprises at least one Gamma characteristics element (1011, 1012, ..., 101n) passed through by the luminance signal during the communication between the first terminal and the second terminal and causing a predetermined overall distortion of the Gamma characteristics of the luminance signal which has to be compensated by said correction, the method comprises:

   determining, by the first terminal and the second terminal, through negotiation whether the Gamma characteristics correction is to be performed on the luminance signal according to correction capability information of both the first terminal and the second terminal before the communication or during an establishment of the communication, wherein the correction capability information comprises whether the first terminal or the second terminal is able to perform the Gamma characteristics correction and/or current processing capability information; and
   selecting the first terminal or the second terminal as a correction-performing terminal when the correction is to be performed, and
   performing, by the correction-performing terminal, the Gamma characteristics correction according to Gamma characteristics information, wherein the Gamma characteristics information comprises a Gamma path formed by all the cascaded Gamma characteristics elements that are sequentially passed through by the luminance signal on both the first and the second terminals in the form of an equivalent model of Gamma characteristic corresponding to each Gamma characteristics element and parameters thereof;
   when the correction is not to be performed, the Gamma characteristic of the luminance signal is not corrected.

2. The method according to claim 1, wherein the selecting the first terminal or the second terminal as a correction-performing terminal comprises:

   selecting the first terminal to be the correction-performing terminal, when only the first terminal is able to perform the Gamma characteristics correction;
   selecting the second terminal to be the correction-performing terminal, when only the second terminal is able to perform the Gamma characteristics correction;
   selecting a terminal with a stronger processing capability currently from the first terminal or the second terminal to be the correction-performing terminal, when both terminals are able to perform the Gamma characteristics correction; and
   selecting a terminal randomly from the first terminal or the second terminal to be the correction-performing terminal, or selecting both terminals to be the correction-performing terminal to correct the Gamma characteristics of the luminance signal received from the far-end terminal corresponding to each other respectively or the Gamma characteristics of the luminance signal sent to the far-end terminal corresponding to each other respectively, when both terminals are able to perform the Gamma characteristics correction and the current processing capabilities thereof are equivalent.

3. The method according to claim 2, further comprising:

   determining, by the first terminal or the second terminal, local Gamma characteristics information respectively, and storing the Gamma characteristics information according to the following four categories:

   Gamma characteristics information of category I: a Gamma path formed by all the cascaded Gamma characteristics elements sequentially passed through on a local terminal which is the first terminal or the second terminal by a luminance signal that is sent to the far-end terminal corresponding to the local terminal by the local terminal as well as the corresponding equivalent model of Gamma characteristic and parameters thereof;
   Gamma characteristics information of category II: a Gamma path formed by all the cascaded Gamma characteristics elements sequentially passed through on the local terminal by a luminance signal that is received from the far-end terminal corresponding to the local terminal as well as the corresponding equivalent model of Gamma characteristic and parameters thereof;
   Gamma characteristics information of category III: a Gamma path formed by all the Gamma characteristics elements sequentially passed through on the local terminal by a local luminance signal as well as the corresponding equivalent model of Gamma characteristic and parameters thereof; and

Gamma characteristics information of category IV: a Gamma path formed by all the Gamma characteristics elements sequentially passed through by a local loopback luminance signal as well as the corresponding equivalent model of Gamma characteristic and parameters thereof.

**4.** The method according to claim 3, wherein the Gamma characteristics information comprises: Gamma characteristics information of category I of a luminance signal transmitting terminal and Gamma characteristics information of category II of a luminance signal receiving terminal; and the Gamma path of the luminance signal is formed according to a sequence that the Gamma path of category I is arranged before the Gamma path of category II.

**5.** The method according to claim 3 or 4, further comprising:

performing, by a terminal selected from the first terminal or the second terminal that is able to perform the Gamma characteristics correction, correction on the local luminance signal according to the Gamma characteristics information of category III, and or on the Gamma characteristics of the loopback luminance signal according to the Gamma characteristics information of category IV.

**6.** The method according to claim 5, wherein the negotiation between the first terminal and the second terminal comprises:

sending, by the first terminal, a negotiation request message for Gamma correction to the second terminal, wherein the negotiation request message contains information about a current correction capability of the first terminal;
receiving, by the second terminal, the negotiation request message for Gamma correction and returning a response message to the first terminal; wherein if the correction-performing terminal is selected by the second terminal according to information of current correction capabilities of both terminals, information about the correction-performing terminal is contained in the response message; if it is determined by the second terminal that no Gamma characteristics correction is to be performed by both terminals, corresponding indication information is contained in the response message.

**7.** The method according to claim 6, wherein:

when the second terminal selects the first terminal to be the correction-performing terminal, and/or both terminals are selected to be the correction-performing terminal, the response message further comprises the Gamma characteristics information of category I and II of the second terminal; and
when the second terminal selects itself to be the correction-performing terminal, and/or both terminals are selected to be the correction-performing terminal, the first terminal sends its Gamma characteristics information of category I and II to the second terminal after receiving the response message.

**8.** The method according to claim 7, further comprising:

updating, by the first terminal or the second terminal, the Gamma characteristics information in time when the Gamma characteristics information varies during the communication, and using the Gamma characteristics information updated for performing the Gamma characteristics correction of the local luminance signal and/or loopback luminance signal; and
when the first terminal or the second terminal is the correction-performing terminal, sending, by a non correction-performing terminal, varied Gamma characteristics information to the correction-performing terminal in time for performing the Gamma characteristics correction of the luminance signal; or when both terminals are the correction-performing terminal, the varied Gamma characteristics information of one terminal is sent to the other terminal in time respectively, for performing the Gamma characteristics correction of the luminance signal.

**9.** The method according to claim 5, wherein the negotiation between the first terminal and the second terminal comprises:

sending, by the first terminal and the second terminal, the current correction capability information to a central server respectively; and
determining, by the central server, whether the correction is to be performed and selecting the correction-performing terminal according to current correction capabilities of both terminals, and returning a result to the first terminal and the second terminal respectively.

**10.** The method according to claim 9, further comprising:

sending, by the first terminal or the second terminal, all the Gamma characteristics information to the central server before the communication or during the establishment of the communication, and managing, by the central server, all the Gamma characteristics information with a dedicated database, wherein the Gamma characteristics information is stored in the database according to a correspondence relation among ID information of the terminal, a category of the Gamma characteristics information, a cascaded path of this category as well as an equivalent model of Gamma characteristic and parameters thereof respectively; and when the first terminal or the second terminal is the correction-performing terminal, obtaining, by the correction-performing terminal, the Gamma characteristics information of category I and category II of the non correction-performing terminal from the database for performing the Gamma characteristics correction of the luminance signal; or when both terminals are the correction-performing terminal, obtaining the Gamma characteristics information of the far-end terminal corresponding to each other from the database for correcting the Gamma characteristics of the luminance signal.

**11.** The method according to claim 10, further comprising:

updating, by the first terminal or the second terminal, the Gamma characteristics information in time when the Gamma characteristics information varies during the communication, and using the Gamma characteristics information updated for performing the Gamma characteristics correction of the local luminance signal and/or loopback luminance signal; and sending varied Gamma characteristics information to the central server in time for updating, or sending all the Gamma characteristics information to the central server for a complete replacement; and when the first terminal or the second terminal is the correction-performing terminal, sending, by the central server, received updated information of the non correction-performing terminal to the correction-performing terminal in time for performing the Gamma characteristics correction of the luminance signal; or when both terminals are the correction-performing terminal, sending, by the central server, the updated Gamma characteristics information of one terminal which is the first terminal or the second terminal to the other terminal in time, for correcting the Gamma characteristics of the luminance signal.

**12.** The method according to claim 6 or 9, wherein the method for performing the Gamma characteristic correction of the luminance signal comprises:

determining the Gamma path of the luminance signal according the Gamma characteristics information, wherein the total number of the Gamma characteristics elements comprised in the Gamma path is Nt; determining, a correction point in the Gamma path, wherein the correction point divides Nt elements into two parts: Na elements cascaded before the correction point and Np elements cascaded after the correction point, wherein Na$\geq$0, Np$\geq$0, and Na+ Np=Nt; establishing a first comprehensive equivalent model of Gamma characteristic for the Na elements and determining a first inverse model thereof as well as establishing a second comprehensive equivalent model of Gamma characteristic for the Np elements and determining a second inverse model thereof according to the Gamma characteristics equivalent model of Gamma characteristic of each element and parameters thereof; and establishing a correction element model according to the first inverse model and the second inverse model, determining a correcting luminance signal for a final output luminance signal of the Na elements with the correction element model, and inputting the correcting luminance signal into the Np elements.

**13.** The method according to claim 12, wherein
when the equivalent model of Gamma characteristic of each element is represented in a function, the comprehensive equivalent model of Gamma characteristic of the cascaded elements is a corresponding composition function, and a representation function of the inverse model is an inverse function of the composition function; and when the comprehensive equivalent model of Gamma characteristic is represented in a data table, the corresponding inverse model is an inverse table of the data table.

**14.** The method according to claim 13, wherein:

when the equivalent model of Gamma characteristic is represented in the function, a method for establishing the correction element model comprises:

a direct calculation method, in which the correcting luminance signal for the final output luminance signal of the Na elements is calculated in real time with the composition function of the function of the first inverse model and that of the second inverse model;

a two-step calculation method, in which a first correcting luminance signal for the final output luminance signal of the Na elements is calculated in real time with the function of the first inverse model, then a second correcting luminance signal of the first correcting luminance signal is calculated with the function of the second inverse model, and the second correcting luminance signal is used as the correcting luminance signal; or

a look-up table method, in which correction values corresponding to a plurality of sample values in the range of the final output values of the Na elements are calculated in advance according to the direct calculation method or the two-step calculation method, and a correspondence relation is saved in a data table, and then the correction value for any value to be corrected may be obtained via querying the data table in real time;

when the equivalent model of Gamma characteristic is represented in the data table, the look-up table method is used for determining the correction value for any value to be corrected.

15. The method according to claim 14, wherein when the equivalent model of Gamma characteristic is represented in the function, a process of determining, by the first terminal or the second terminal, the equivalent model of Gamma characteristic of each Gamma characteristics element on the first terminal or the second terminal and the parameters thereof comprises:

M1. detecting respectively N values LPout(i) of an actual output luminance signal generated through inputting N sample values Lin(i) of an input luminance signal into the element, wherein $0 \leq i \leq N-1$;

M2. selecting a model to be detected from a set of candidate equivalent models of Gamma characteristic represented in functions, and then executing M3;

M3. selecting a set of initial parameters for the model to be detected;

M4. performing calculation:

calculating N values LMout(i) of a theoretical output luminance signal corresponding to the N sample values according to the model to be detected, wherein $0 \leq i \leq N-1$; and

calculating an object function value F, wherein the object function value F is relevant to a difference of each pair of corresponding LPout(i) and LMout(i);

M5. determining whether the object function value F is equal to or smaller than a configured threshold value; if yes, it is determined that the model to be detected is accepted as a final equivalent model of Gamma characteristic, and parameters corresponding to a minimum object function value F are taken as parameters of the equivalent model of Gamma characteristic, then turning to M8; otherwise, executing M6;

M6. determining whether the number of the execution of M4 reaches a defined iteration number; if yes, another equivalent model of Gamma characteristic is selected from candidate equivalent models of Gamma characteristic that are not detected as a model of Gamma characteristic to be detected, and then returning to M3; otherwise, executing M7;

M7. adjusting the parameters of the model with a mathematical optimum method, and then returning to M4;

M8. ending.

16. The method according to claim 15, wherein in the M5, when the object function value F is equal to or smaller than the configured threshold value, the parameters are adjusted with the mathematical optimum method according to the configured iteration number, and the object function value F is calculated, then the parameters corresponding to the minimum object function value F are taken as the parameters of the equivalent model of Gamma characteristic.

17. The method according to claim 16, wherein the object function value F satisfies the following condition:

$$F = \sum_{i=0}^{N-1} (L_{out}^{P}(i) - L_{out}^{M}(i))^2$$

.

18. The method according to claim 15, wherein the functions of the set of candidate equivalent models of Gamma characteristic represented in functions and the corresponding inverse functions thereof are as follows:

the function of the Gamma characteristics equivalent model is:

$L_{\text{out}} = pL_{in}{}^a + (1 - p)$, wherein a domain of definition of the function is an interval [0, 1], and a range of values is an interval [(1-p), 1]; then the inverse function of this function is :

$$L_{out} = (\frac{1}{p} L_{in} + (1 - \frac{1}{p}))^{\frac{1}{a}} \quad ,$$

or

the function of the Gamma characteristics equivalent model is:

$$L_{out} = (qL_{in} + (1 - q))^{\frac{1}{\beta}} \quad , \text{ wherein the domain of definition of the function is the interval [1-1/q, 1],}$$

and the range of values is the interval [0, 1]; then the inverse function of this function is:

$$L_{out} = \frac{1}{q} L_{in}{}^{\beta} + (1 - \frac{1}{q}) \quad ;$$

wherein: Lin is a value of an input luminance signal, Lout is a value of an output luminance signal, p and $\alpha$ as well as q and $\beta$ are parameters to be measured respectively; and when Na=1 or Np=1: $0<p\leq1$, $\alpha\geq1$, $q\geq1$, $\beta\geq1$; and when Na>1 or Np>1: $0<p\leq1$, $\alpha\geq0$, $q\geq1$, $\beta\geq0$.

19. The method according to claim 15, wherein the mathematical optimum method is: hill climbing method, 0.618 method, steepest descent method or conjugate gradient method.

20. The method according to claim 15, wherein the N sample values of the input luminance signal is selected from the interval [0, 1].

21. A system for performing Gamma characteristics correction of a luminance signal communicated between a first terminal and a second terminal, said system comprising said first terminal and said second terminal, wherein the first terminal and the second terminal are the far-end terminal corresponding to each other respectively, each of the first terminal and the second terminal comprises at least one Gamma characteristics element (1011, 1012, ..., 101n) passed through by the luminance signal during the communication between the first terminal and the second terminal and causing a predetermined overall distortion of the Gamma characteristics of the luminance signal which has to be compensated by said correction,
wherein each terminal further comprises: a communication interface module (103) and a correction module (102); each communication interface module (103) being adapted to perform a correction negotiation with the respective far-end terminal and select the communication terminal or the far-end terminal as a correction-performing terminal, and forward a negotiation result about whether the correction is to be performed and/or information about the correction-performing terminal selected as well as Gamma characteristics information of the far-end terminal to the correction module; and
each correction module (102) being adapted to perform the Gamma characteristics correction according to the Gamma characteristics information of the communication terminal and/or the far-end terminal, wherein the Gamma characteristics information comprises a Gamma path formed by all the sequentially cascaded Gamma characteristics elements (1011, 1012, ..., 101n) that are passed through by the luminance signal in the form of an equivalent model of Gamma characteristic corresponding to each Gamma characteristics element and parameters thereof.

22. The system according to claim 21, wherein each correction module for Gamma characteristics (102) comprises:

a detection sub-module (1021), adapted to detect the Gamma characteristics information, wherein the Gamma characteristics information comprises the Gamma path formed by all the sequentially cascaded local Gamma characteristics elements (1011, 1012, ..., 101n) as well as an equivalent model of Gamma characteristic corresponding to each Gamma characteristics element and parameters thereof;
a storage sub-module (1022), adapted to store local Gamma characteristics information;
an execution sub-module (1023), adapted to construct a correction element module according to the Gamma characteristics information saved on the local terminal and/or received from the far-end terminal corresponding to the communication terminal; and
a correction element (1024), adapted to correct the Gamma characteristics of the luminance signal according to the correction element module.

23. The system according to claim 22, wherein the correction elements (1024) comprise one of the following elements or any combination thereof:

a first correction sub-element (10241), adapted to correct the Gamma characteristics of a luminance signal;
a second correction sub-element (10242), adapted to correct the Gamma characteristics of a local luminance signal; and a third correction sub-element (10243), adapted to correct the Gamma characteristics of a loopback luminance signal.

24. A system for performing Gamma characteristics correction of a luminance signal communicated between a first terminal and a second terminal, said system comprising said first terminal and said second terminal, wherein the first terminal and the second terminal are the far-end terminal corresponding to each other respectively, each of the first terminal and the second terminal comprises at least one Gamma characteristics element (1011, 1012, ..., 101n) passed through by the luminance signal during the communication between the first terminal and the second terminal and causing a predetermined overall distortion of the Gamma characteristics of the luminance signal which has to be compensated by said correction,
wherein each terminal further comprises a communication interface module (103) and a correction module (102) and the system further comprises a central server module connected with each correction module (102) via communication;
wherein each correction module (102) is adapted to detect and save Gamma characteristics information on a local terminal which is the first terminal or the second terminal, and send the Gamma characteristics information to the central server module before the communication is established; and is adapted to perform the Gamma characteristics correction according to the Gamma characteristics information of the far-end terminal and/or that of the local terminal;
wherein the Gamma characteristics information is obtained from the central server module or sent initiatively by the central server module and comprises a Gamma path formed by all the sequentially cascaded Gamma characteristics elements (1011, 1012, ..., 101n) that are passed through by the luminance signal in the form of an equivalent model of Gamma characteristic corresponding to each Gamma characteristics element and parameters thereof;
wherein each communication interface module (103) is connected between the correction module (102) of the respective local terminal and the central server module, and is adapted to provide a communication interface for the correction module (102) and to receive/transmit the Gamma characteristics information exchanged between a local correction module (102) on a local terminal which is the first terminal or the second terminal and the central server module or between the local correction module (102) and a far-end correction module on the far-end terminal; and
and wherein the communication interface module (103) is further adapted to exchange Gamma characteristics correction capability information of both terminals involved in correction with the far-end terminal in the communication directly, and determine whether the Gamma characteristics correction is to be performed and select the first terminal or the second terminal as a correction-performing terminal; or the communication interface module (103) is adapted to forward a determination about whether the correction is to be performed made by the central server module and/or information about the correction-performing terminal selected according to correction capabilities of both terminals as well as the Gamma characteristics information of the far-end terminal to the correction module (102).

25. The correction system according to claim 24, wherein each correction module comprises:

a detection sub-module (1021), adapted to detect the Gamma characteristics information, wherein the Gamma characteristics information comprises the Gamma path formed by all the sequentially cascaded local Gamma characteristics elements (1011, 1012, ..., 101n) in the form of the equivalent model of Gamma characteristic corresponding to each Gamma characteristics element (1011, 1012, ..., 101n) and parameters thereof;
a storage sub-module (1022), adapted to store the Gamma characteristics information of the local terminal and that of the far-end terminal;
an execution sub-module (1023), adapted to construct a correction element module according to the Gamma characteristics information of the local terminal and/or that of the far-end terminal; and

a correction element (1024), adapted to correct the Gamma characteristics of the luminance signal according to the correction element module.

26. The correction system according to claim 25, wherein each correction element (1024) comprises one of the following elements or any combination thereof:

a first correction sub-element (10241), adapted to perform the Gamma characteristics correction of a luminance signal;
a second correction sub-element (10242), adapted to perform the Gamma characteristics correction of a local luminance signal; and
a third correction sub-element (10243), adapted to perform the Gamma characteristics correction of a loopback luminance signal.

27. The correction system according to any one of claims 24 to 26, wherein the two terminals are connected via a communication network, and the central server module is arranged in the communication network.

28. The correction system according to claim 27, wherein the communication network refers to a packet switched network or a circuit switched network.

**Patentansprüche**

1. Verfahren zum Ausführen einer Gammakurvenkorrektur eines zwischen einem ersten Endgerät und einem zweiten Endgerät übermittelten Luminanzsignals, wobei das erste Endgerät und das zweite Endgerät das jeweils einander entsprechende Endgerät des fernen Endes sind, wobei das erste Endgerät und das zweite Endgerät jeweils mindestens ein Gammakurvenelement (1011, 1012, ..., 101n) umfassen, das durch das Luminanzsignal während der Kommunikation zwischen dem ersten Endgerät und dem zweiten Endgerät durchlaufen wird und eine vorbestimmte Gesamtverzerrung der Gammakurven des Luminanzsignals, die durch die Korrektur kompensiert werden muss, verursacht, wobei das Verfahren die folgenden Schritte umfasst:

Bestimmen durch das erste Endgerät und das zweite Endgerät durch Aushandlung, ob die Gammakurvenkorrektur an dem Luminanzsignal auszuführen ist, gemäß Korrekturfähigkeitsinformationen sowohl des ersten Endgeräts als auch des zweiten Endgeräts vor der Kommunikation oder während einer Herstellung der Kommunikation, wobei die Korrekturfähigkeitsinformationen umfassen, ob das erste Endgerät oder das zweite Endgerät in der Lage ist, die Gammakurvenkorrektur auszuführen, und/oder aktuelle Verarbeitungsfähigkeitsinformationen umfassen; und
Auswählen des ersten Endgeräts oder des zweiten Endgeräts als ein korrekturausführendes Endgerät, wenn die Korrektur auszuführen ist, und
Ausführen der Gammakurvenkorrektur durch das korrekturausführende Endgerät gemäß Gammakurveninformationen, wobei die Gammakurveninformationen einen Gammapfad umfassen, der durch alle kaskadierten Gammakurvenelemente gebildet wird, die sequentiell durch das Luminanzsignal sowohl auf dem ersten als auch dem zweiten Endgerät durchlaufen werden, in Form eines äquivalenten Modells der Gammakurve entsprechend jedem Gammakurvenelement und Parametern davon;
wobei, wenn die Korrektur nicht auszuführen ist, die Gammakurve des Luminanzsignals nicht korrigiert wird.

2. Verfahren nach Anspruch 1, wobei das Auswählen des ersten Endgeräts oder des zweiten Endgeräts als ein korrekturausführendes Endgerät Folgendes umfasst:

Auswählen des ersten Endgeräts als das korrekturausführende Endgerät, wenn nur das erste Endgerät in der Lage ist, die Gammakurvenkorrektur auszuführen;
Auswählen des zweiten Endgeräts als das korrekturausführende Endgerät, wenn nur das zweite Endgerät in der Lage ist, die Gammakurvenkorrektur auszuführen;
Auswählen eines Endgeräts mit derzeit stärkerer Verarbeitungsfähigkeit aus dem ersten Endgerät oder dem zweiten Endgerät als das korrekturausführende Endgerät, wenn beide Endgeräte in der Lage sind, die Gammakurvenkorrektur auszuführen; und
zufälliges Auswählen einer Endgeräts aus dem ersten Endgerät oder dem zweiten Endgerät als das korrekturausführende Endgerät oder Auswählen beider Endgeräte als das korrekturausführende Endgerät zum Korrigieren der Gammakurven des jeweils von dem einander entsprechenden Endgerät des fernen Endes empfangenen Luminanzsignals oder der Gammakurven des zu dem jeweils einander entsprechenden Endgerät des fernen Endes gesendeten Luminanzsignals, wenn beide Endgeräte in der Lage sind, die Gammakurvenkorrektur auszuführen, und die aktuellen Verarbeitungsfähigkeiten dieser äquivalent sind.

3. Verfahren nach Anspruch 2, ferner mit den folgenden Schritten:

Bestimmen durch das erste Endgerät oder das zweite Endgerät jeweils von lokalen Gammakurveninformationen und Speichern der Gammakurveninformationen gemäß den folgenden vier Kategorien:
Gammakurveninformationen der Kategorie I: ein Gammapfad, der durch alle kaskadierten Gammakurvenelemente gebildet wird, die sequentiell auf einem lokalen Endgerät, das das erste Endgerät oder das zweite Endgerät ist, durch ein Luminanzsignal durchlaufen werden, das durch das lokale Endgerät zu dem dem lokalen Endgerät entsprechenden Endgerät des fernen Endes gesendet wird, sowie das entsprechende äquivalente Modell der Gammakurve und Parameter davon;
Gammakurveninformationen der Kategorie II: ein Gammapfad, der durch alle kaskadierten Gammakurvenelemente gebildet wird, die sequentiell auf dem lokalen Endgerät durch ein Luminanzsignal durchlaufen werden, das von dem dem lokalen Endgerät entsprechenden Endgerät des fernen Endes empfangen wird, sowie das entsprechende äquivalente Modell der Gammakurve und Parameter davon;
Gammakurveninformationen der Kategorie III: ein Gammapfad, der durch alle Gammakurvenelemente gebildet wird, die sequentiell auf dem lokalen Endgerät durch ein lokales Luminanzsignal durchlaufen werden, sowie das entsprechende äquivalente Modell der Gammakurve und Parameter davon; und
Gammakurveninformationen der Kategorie IV: ein Gammapfad, der durch alle Gammakurvenelemente gebildet wird, die sequentiell durch ein lokales Prüfschleifen-Luminanzsignal durchlaufen werden, sowie das entsprechende äquivalente Modell der Gammakurve und Parameter davon.

4. Verfahren nach Anspruch 3, wobei die Gammakurveninformationen Folgendes umfassen: Gammakurveninformationen der Kategorie I eines Luminanzsignalsende-Endgeräts und Gammakurveninformationen der Kategorie II eines Luminanzsignalempfangs-Endgeräts; und der Gammapfad des Luminanzsignals gemäß einer Sequenz gebildet wird, in der der Gammapfad der Kategorie I vor dem Gammapfad der Kategorie II angeordnet ist.

5. Verfahren nach Anspruch 3 oder 4, ferner mit dem folgenden Schritt:

Ausführen einer Korrektur an dem lokalen Luminanzsignal durch ein aus dem ersten Endgerät und dem zweiten Endgerät ausgewähltes Endgerät, das in der Lage ist, die Gammakurvenkorrektur auszuführen, gemäß den Gammakurveninformationen der Kategorie III und/oder an den Gammakurven des Prüfschleifen-Luminanzsignals gemäß den Gammakurveninformationen der Kategorie IV.

6. Verfahren nach Anspruch 5, wobei die Aushandlung zwischen dem ersten Endgerät und dem zweiten Endgerät Folgendes umfasst:

Senden einer Aushandlungsanforderungsnachricht zur Gammakorrektur durch das erste Endgerät zu dem zweiten Endgerät, wobei die Aushandlungsanforderungsnachricht Informationen über eine aktuelle Korrekturfähigkeit des ersten Endgeräts enthält;
Empfangen der Aushandlungsanforderungsnachricht für Gammakorrektur durch das zweite Endgerät und Zurückgeben einer Antwortnachricht an das erste Endgerät;
wobei, wenn das korrekturausführende Endgerät durch das zweite Endgerät gemäß Informationen aktueller Korrekturfähigkeiten beider Endgeräte ausgewählt wird,
Informationen über das korrekturausführende Endgerät in der Antwortnachricht enthalten sind; und wenn durch das zweite Endgerät bestimmt wird, dass durch beide Endgeräte keine Gammakurvenkorrektur auszuführen ist, entsprechende Indikationsinformationen in der Antwortnachricht enthalten sind.

7. Verfahren nach Anspruch 6, wobei,
wenn das zweite Endgerät das erste Endgerät als das korrekturausführende Endgerät auswählt und/oder beide Endgeräte als das korrekturausführende Endgerät ausgewählt werden, die Antwortnachricht ferner die Gammakurveninformationen der Kategorie I und II des zweiten Endgeräts umfasst; und
wenn das zweite Endgerät sich selbst als das korrekturausführende Endgerät auswählt und/oder beide Endgeräte als das korrekturausführende Endgerät ausgewählt werden, das erste Endgerät seine Gammakurveninformationen der Kategorie I und II nach dem Empfang der Antwortnachricht zu dem zweiten Endgerät sendet.

8. Verfahren nach Anspruch 7, ferner mit den folgenden Schritten:

rechtzeitiges Aktualisieren der Gammakurveninformationen durch das erste Endgerät oder das zweite Endgerät, wenn die Gammakurveninformationen während der Kommunikation variieren, und Verwenden der aktualisierten Gammakurveninformationen zum Ausführen der Gammakurvenkorrektur des lokalen Luminanzsignals und/oder des Prüfschleifen-Luminanzsignals; und
wenn das erste Endgerät oder das zweite Endgerät das korrekturausführende Endgerät ist, rechtzeitiges Senden von variierten Gammakurveninformationen durch ein nicht korrekturausführendes Endgerät zu dem korrekturausfiihrenden Endgerät zum Ausführen der Gammakurvenkorrektur des Luminanzsignals; oder wenn beide Endgeräte das korrekturausführende Endgerät sind, Senden der variierten Gammakurveninformationen eines Endgeräts jeweils rechtzeitig zu dem anderen Endgerät, um die Gammakurvenkorrektur des Luminanzsignals auszuführen.

9. Verfahren nach Anspruch 5, wobei die Aushandlung zwischen dem ersten Endgerät und dem zweiten Endgerät Folgendes umfasst:

Senden der aktuellen Korrekturfähigkeitsinformationen durch das erste Endgerät und das zweite Endgerät jeweils zu einem zentralen Server; und
Bestimmen durch den zentralen Server, ob die Korrektur auszuführen ist, und Auswählen des korrekturausführenden Endgeräts gemäß aktuellen Korrekturfähigkeiten beider Endgeräte und Zurückgeben eines Ergebnisses an das erste Endgerät bzw. das zweite Endgerät.

10. Verfahren nach Anspruch 9, ferner mit den folgenden Schritten:

Senden aller Gammakurveninformationen durch das erste Endgerät oder das zweite Endgerät zu dem zentralen Server vor der Kommunikation oder während der Herstellung der Kommunikation und
Verwalten aller Gammakurveninformationen durch den zentralen Server mit einer dedizierten Datenbank, wobei die Gammakurveninformationen in der Datenbank jeweils gemäß einer Korrespondenzbeziehung zwischen ID-Informationen des Endgeräts, einer Kategorie der Gammakurveninformationen, einem kaskadierten Pfad dieser Kategorie sowie einem äquivalenten Modell der Gammakurve und Parametern davon gespeichert werden; und
wenn das erste Endgerät oder das zweite Endgerät das korrekturausführende Endgerät ist, Erhalten der Gammakurveninformationen der Kategorie I und Kategorie II des nicht korrekturausführenden Endgeräts durch das korrekturausführende Endgerät aus der Datenbank zum Ausführen der Gammakurvenkorrektur des Luminanzsignals; oder
wenn beide Endgeräte das korrekturausführende Endgerät sind, Erhalten der Gammakurveninformationen des jeweils einander entsprechenden Endgeräts des fernen Endes aus der Datenbank zum Korrigieren der Gammakurven des Luminanzsignals.

11. Verfahren nach Anspruch 10, ferner mit den folgenden Schritten:

rechtzeitiges Aktualisieren der Gammakurveninformationen durch das erste Endgerät oder das zweite Endgerät, wenn die Gammakurveninformationen während der Kommunikation variieren, und Verwenden der aktualisierten Gammakurveninformationen zum Ausführen der Gammakurvenkorrektur des lokalen Luminanzsignals und/oder des Prüfschleifen-Luminanzsignals; und rechtzeitiges Senden von variierten Gammakurveninformationen zu dem zentralen Server zur Aktualisierung oder Senden aller Gammakurveninformationen zu dem zentralen Server für eine vollständige Ersetzung; und
wenn das erste Endgerät oder das zweite Endgerät das korrekturausführende Endgerät ist, rechtzeitiges Senden von empfangenen aktualisierten Informationen des nicht korrekturausführenden Endgeräts durch den zentralen Server zu dem korrekturausführenden Endgerät zum Ausführen der Gammakurvenkorrektur des Luminanzsignals; oder wenn beide Endgeräte das korrekturausführende Endgerät sind, rechtzeitiges Senden der aktualisierten Gammakurveninformationen eines Endgeräts, das das erste Endgerät oder das zweite Endgerät ist, durch den zentralen Server zu dem anderen Endgerät zum Korrigieren der Gammakurven des Luminanzsignals.

12. Verfahren nach Anspruch 6 oder 9, wobei das Verfahren zum Ausführen der Gammakurvenkorrektur des Luminanzsignals Folgendes umfasst:

Bestimmen des Gammapfads des Luminanzsignals gemäß den Gammakurveninformationen, wobei die Gesamtzahl der in dem Gammapfad enthaltenen Gammakurvenelemente Nt ist;

Bestimmen eines Korrekturpunkts in dem Gammapfad, wobei der Korrekturpunkt Nt Elemente in zwei Teile aufteilt: Na vor dem Korrekturpunkt kaskadierte Elemente und Np nach dem Korrekturpunkt kaskadierte Elemente, wobei Na≥0, Np≥0 und Na+Np=Nt ist;

Herstellen eines ersten umfassenden äquivalenten Modells der Gammakurve für die Na Elemente und Bestimmen eines ersten inversen Modells davon sowie Herstellen eines zweiten umfassenden äquivalenten Modells der Gammakurve für die Np Elemente und Bestimmen eines zweiten inversen Modells davon gemäß dem äquivalenten Gammakurvenmodell der Gammakurve jedes Elements und Parametern davon; und

Herstellen eines Korrekturelementmodells gemäß dem ersten inversen Modell und dem zweiten inversen Modell, Bestimmen eines korrigierenden Luminanzsignals für ein Endausgabe-Luminanzsignal der Na Elemente mit dem Korrekturelementmodell und Eingeben des korrigierenden Luminanzsignals in die Np Elemente.

13. Verfahren nach Anspruch 12, wobei,

wenn das äquivalente Modell der Gammakurve jedes Elements in einer Funktion dargestellt ist, das umfassende äquivalente Modell der Gammakurve der kaskadierten Elemente eine entsprechende Verknüpfungsfunktion ist und eine Darstellungsfunktion des inversen Modells eine Umkehrfunktion der Verknüpfungsfunktion ist; und

wenn das umfassende äquivalente Modell der Gammakurve in einer Datentabelle dargestellt ist, das entsprechende inverse Modell eine Umkehrtabelle der Datentabelle ist.

14. Verfahren nach Anspruch 13, wobei,

wenn das äquivalente Modell der Gammakurve in der Funktion dargestellt ist, ein Verfahren zum Herstellen des Korrekturelementmodells Folgendes umfasst:

ein direktes Berechnungsverfahren, bei dem das korrigierende Luminanzsignal für das Endausgabe-Luminanzsignal der Na Elemente in Echtzeit mit der Verknüpfungsfunktion der Funktion des ersten inversen Modells und der des zweiten inversen Modells berechnet wird;

ein zweischrittiges Berechnungsverfahren, bei dem ein erstes korrigierendes Luminanzsignal für das Endausgabe-Luminanzsignal der Na Elemente in Echtzeit mit der Funktion des ersten inversen Modells berechnet wird und dann ein zweites korrigierendes Luminanzsignal des ersten korrigierenden Luminanzsignals mit der Funktion des zweiten inversen Modells berechnet wird und das zweite korrigierende Luminanzsignal als das korrigierende Luminanzsignal verwendet wird; oder

ein Nachschlagetabellenverfahren, bei dem Korrekturwerte entsprechend einer Vielzahl von Abtastwerten in dem Bereich der Endausgabewerte der Na Elemente im Voraus gemäß dem direkten Berechnungsverfahren oder dem zweischrittigen Berechnungsverfahren berechnet werden und eine Korrespondenzbeziehung in einer Datentabelle abgespeichert wird und dann der Korrekturwert für jeden zu korrigierenden Wert über Abfrage der Datentabelle in Echtzeit erhalten werden kann;

wenn das äquivalente Modell der Gammakurve in der Datentabelle dargestellt ist, das Nachschlagetabellenverfahren zur Bestimmung des Korrekturwerts für jeden zu korrigierenden Wert verwendet wird.

15. Verfahren nach Anspruch 14, wobei, wenn das äquivalente Modell der Gammakurve in der Funktion dargestellt ist, ein Prozess zum Bestimmen des äquivalenten Modells der Gammakurve jedes Gammakurvenelements auf dem ersten Endgerät oder dem zweiten Endgerät und der Parameter davon durch das erste Endgerät oder das zweite Endgerät Folgendes umfasst:

M1. jeweiliges Detektieren von N Werten LPout(i) eines tatsächlichen Ausgangsluminanzsignals, die durch Eingeben von N Abtastwerten Lin(i) eines Eingangsluminanzsignals in das Element erzeugt werden, wobei 0≤i≤N-1 ist;

M2. Auswählen eines zu detektierenden Modells aus einer Menge von in Frage kommenden äquivalenten Modellen von Gammakurven, die in Funktionen dargestellt sind, und dann Ausführen von M3;

M3. Auswählen einer Menge von Anfangsparametern für das zu detektierende Modell;

M4. Ausführen einer Berechnung:

Berechnen von N Werten LMout(i) eines theoretischen Ausgangsluminanzsignals entsprechend den N Abtastwerten gemäß dem zu detektierenden Modell, wobei 0≤i≤N-1 ist; und

Berechnen eines Objektsfunktionswerts F, wobei der Objektfunktionswert F für eine Differenz jedes Paars entsprechender LPout(i) und LMout(i) relevant ist;

M5. Bestimmen, ob der Objektfunktionswert F kleiner oder gleich einem konfigurierten Schwellenwert ist; wenn ja, wird bestimmt, dass das zu detektierende Modell als ein letztendliches äquivalentes Modell der Gammakurve angenommen wird, und einem minimalen Objektfunktionswert F entsprechende Parameter werden als Parameter des äquivalenten Modells der Gammakurve genommen, dann Übergehen zu M8; andernfalls Ausführen von M6;

M6. Bestimmen, ob die Ausführungsanzahl von M4 eine definierte Iterationsanzahl erreicht; wenn ja, wird ein anderes äquivalentes Modell der Gammakurve aus in Frage kommenden äquivalenten Modellen der Gammakurve ausgewählt, die nicht als ein zu detektierendes Modell der Gammakurve detektiert werden, und dann Zurückkehren zu M3, andernfalls Ausführen von M7;

M7. Justieren der Parameter des Modells mit einem mathematischen Optimalverfahren und dann Zurückkehren zu M4;

M8. Beenden.

16. Verfahren nach Anspruch 15, wobei in M5, wenn der Objektfunktionswert F kleiner oder gleich dem konfigurierten Schwellenwert ist, die Parameter mit dem mathematischen Optimalverfahren gemäß der konfigurierten Iterationsanzahl justiert werden und der Objektfunktionswert F berechnet wird und dann die dem minimalen Objektfunktionswert F entsprechenden Parameter als die Parameter des äquivalenten Modells der Gammakurve genommen werden.

17. Verfahren nach Anspruch 16, wobei der Objektfunktionswert F die folgende Bedingung erfüllt:

$$F = \sum_{i=0}^{N-1} (L_{out}^{P}(i) - L_{out}^{M}(i))^2$$

.

18. Verfahren nach Anspruch 15, wobei die Funktionen der Menge von in Frage kommenden äquivalenten Modellen der Gammakurve in Funktionen dargestellt werden und die entsprechenden Umkehrfunktionen davon wie folgt lauten:

die Funktion des äquivalenten Gammakurvenmodells ist

$L_{out} = pL_{in}{}^a + (1 - p)$, wobei ein Definitionsbereich der Funktion ein Intervall [0, 1] ist und ein Wertebereich ein Intervall [(1-p), 1] ist; die Umkehrfunktion dieser Funktion

ist dann $L_{out} = (\frac{1}{p} L_{in} + (1 - \frac{1}{p}))^{\frac{1}{a}}$ oder ,

die Funktion des äquivalenten Gammakurvenmodells ist $L_{out} = (qL_{in} + (1 - q))^{\frac{1}{\beta}}$, wobei der Definitionsbereich der Funktion das Intervall [1-1/q, 1] ist und der Wertebereich das Intervall [0, 1 ist; die Umkehrfunktion dieser Funktion ist dann $L_{out} = \frac{1}{q} L_{in}{}^{\beta} + (1 - \frac{1}{q})$ ;

wobei Lin ein Wert eines Eingangsluminanzsignals ist, Lout ein Wert eines Ausgangsluminanzsignals ist, p und $\alpha$ sowie q und $\beta$ jeweils zu messende Parameter sind; und wenn Na=1 oder Np=1 ist, 0<p≤1, $\alpha$≥1, q≥1, $\beta$≥1 gilt; und wenn Na>1 oder Np>1 ist, 0<p≤1, *$\alpha$≥0, q≥1, $\beta$≥0 gilt.

19. Verfahren nach Anspruch 15, wobei das mathematische Optimalverfahren das Bergsteigerverfahren, das 0,618-Verfahren, das Verfahren des steilsten Abstiegs oder das Verfahren der konjugierten Gradienten ist.

20. Verfahren nach Anspruch 15, wobei die N Abtastwerte des Eingangsluminanzsignals aus dem Intervall [0, 1] ausgewählt werden.

21. System zum Ausführen von Gammakurvenkorrektur eines zwischen einem ersten Endgerät und einem zweiten Endgerät übermittelten Luminanzsignals, wobei das System das erste Endgerät und das zweite Endgerät umfasst, wobei das erste Endgerät und das zweite Endgerät das jeweils einander entsprechende Endgerät des fernen Endes sind, wobei das erste Endgerät und das zweite Endgerät jeweils mindestens ein Gammakurvenelement (1011, 1012, ..., 101n) umfassen, das durch das Luminanzsignal während der Kommunikation zwischen dem ersten Endgerät und dem zweiten Endgerät durchlaufen wird und eine vorbestimmte Gesamtverzerrung der Gammakurven des Luminanzsignals, die durch die Korrektur kompensiert werden muss, verursacht,

wobei jedes Endgerät ferner Folgendes umfasst: ein Kommunikationsschnittstellenmodul (103) und ein Korrekturmodul (102);

wobei jedes Kommunikationsschnittstellenmodul (103) dafür ausgelegt ist, eine Korrekturaushandlung mit dem jeweiligen Endgerät des fernen Endes auszuführen und das Kommunikationsendgerät oder das Endgerät des fernen Endes als ein korrekturausführendes Endgerät auszuwählen und ein Aushandlungsergebnis darüber, ob die Korrektur auszuführen ist, und/oder Informationen über das ausgewählte korrekturausführende Endgerät sowie Gammakurveninformationen des Endgeräts des fernen Endes zu dem Korrekturmodul weiterzuleiten; und

jedes Korrekturmodul (102) dafür ausgelegt ist, die Gammakurvenkorrektur gemäß den Gammakurveninformationen des Kommunikationsendgeräts und/oder des Endgeräts des fernen Endes auszuführen, wobei die Gammakurveninformationen Folgendes umfassen: einen Gammapfad, der durch alle sequentiell kaskadierten Gammakurvenelemente (1011, 1012, ..., 101n) gebildet wird, die durch das Luminanzsignal durchlaufen werden, in der Form eines äquivalenten Modells der Gammakurve entsprechend jedem Gammakurvenelement und Parametern davon.

22. System nach Anspruch 21, wobei jedes Korrekturmodul für Gammakurven (102) Folgendes umfasst:

ein Detektionssubmodul (1021), das dafür ausgelegt ist, die Gammakurveninformationen zu detektieren, wobei die Gammakurveninformationen Folgendes umfassen: den Gammapfad, der durch alle sequentiell kaskadierten lokalen Gammakurvenelemente (1011, 1012, ..., 101n) gebildet wird, sowie ein äquivalentes Modell der Gammakurve entsprechend jedem Gammakurvenelement und Parametern davon;

ein Speichersubmodul (1022), das dafür ausgelegt ist, lokale Gammakurveninformationen zu speichern;

ein Ausführungssubmodul (1023), das dafür ausgelegt ist, gemäß den auf dem lokalen Endgerät abgespeicherten und/oder von dem dem Kommunikationsendgerät entsprechenden Endgerät des fernen Endes empfangenen Gammakurveninformationen ein Korrekturelementmodul zu konstruieren; und

ein Korrekturelement (1024), das dafür ausgelegt ist, die Gammakurven des Luminanzsignals gemäß dem Korrekturelementmodul zu korrigieren.

23. System nach Anspruch 22, wobei die Korrekturelemente (1024) eines der folgenden Elemente oder eine beliebige Kombination davon umfassen:

ein erstes Korrektursubelement (10241), das dafür ausgelegt ist, die Gammakurven eines Luminanzsignals zu korrigieren;

ein zweites Korrektursubelement (10242), das dafür ausgelegt ist, die Gammakurven eines lokalen Luminanzsignals zu korrigieren; und

ein drittes Korrektursubelement (10243), das dafür ausgelegt ist, die Gammakurven eines Prüfschleifen-Luminanzsignals zu korrigieren.

24. System zum Ausführen von Gammakurvenkorrektur eines zwischen einem ersten Endgerät und einem zweiten Endgerät übermittelten Luminanzsignals, wobei das System das erste Endgerät und das zweite Endgerät umfasst, wobei das erste Endgerät und das zweite Endgerät das jeweils einander entsprechende Endgerät des fernen Endes sind, wobei das erste Endgerät und das zweite Endgerät jeweils mindestens ein Gammakurvenelement (1011, 1012, ..., 101n) umfassen, das durch das Luminanzsignal während der Kommunikation zwischen dem ersten Endgerät und dem zweiten Endgerät durchlaufen wird und eine vorbestimmte Gesamtverzerrung der Gammakurven des Luminanzsignals, die durch die Korrektur kompensiert werden muss, verursacht,

wobei jedes Endgerät ferner ein Kommunikationsschnittstellenmodul (103) und ein Korrekturmodul (102) umfasst und das System ferner ein über Kommunikation mit jedem Korrekturmodul (102) verbundenes Zentralservermodul umfasst;

wobei jedes Korrekturmodul (102) dafür ausgelegt ist, Gammakurveninformationen auf einem lokalen Endgerät, das das erste Endgerät oder das zweite Endgerät ist, zu detektieren und abzuspeichern und die Gammakurveninformationen zu dem Zentralservermodul zu senden, bevor die Kommunikation hergestellt ist; und dafür ausgelegt ist, die Gammakurvenkorrektur gemäß den Gammakurveninformationen des Endgeräts des fernen Endes und/oder denen des lokalen Endgeräts auszuführen; wobei die Gammakurveninformationen aus dem Zentralservermodul erhalten oder anfänglich durch das Zentralservermodul gesendet werden und Folgendes umfassen: einen Gammapfad, der durch alle sequentiell kaskadierten Gammakurvenelemente (1011, 1012, ..., 101n) gebildet wird, die durch das Luminanzsignal durchlaufen werden, in der Form eines äquivalenten Modells der Gammakurve entsprechend jedem Gammakurvenelement und Parametern davon;

wobei jedes Kommunikationsschnittstellenmodul (103) zwischen das Korrekturmodul (102) des jeweiligen lokalen Endgeräts und das Zentralservermodul geschaltet ist und dafür ausgelegt ist, eine Kommunikationsschnittstelle für das Korrekturmodul (102) bereitzustellen und die zwischen einem lokalen Korrekturmodul (102) auf einem lokalen Endgerät, das das erste Endgerät oder das zweite Endgerät ist, und dem Zentralservermodul oder zwischen dem lokalen Korrekturmodul (102) und einem Korrekturmodul des fernen Endes auf dem Endgerät des fernen Endes ausgetauschten Gammakurveninformationen zu empfangen bzw. zu senden; und

wobei das Kommunikationsschnittstellenmodul (103) ferner dafür ausgelegt ist, direkt Gammakurvenkorrektur-Fähigkeitsinformationen beider an der Korrektur beteiligten Endgeräte mit dem Endgerät des fernen Endes bei der Kommunikation auszutauschen und zu bestimmen, ob die Gammakurvenkorrektur auszuführen ist und das erste Endgerät oder das zweite Endgerät als ein korrekturausführendes Endgerät auszuwählen; oder das Kommunikationsschnittstellenmodul (103) dafür ausgelegt ist, eine durch das Zentralservermodul durchgeführte Bestimmung darüber, ob die Korrektur auszuführen ist, und/oder Informationen über das gemäß Korrekturfähigkeiten beider Endgeräte ausgewählte korrekturausführende Endgerät sowie die Gammakurveninformationen des Endgeräts des fernen Endes zu dem Korrekturmodul (102) weiterzuleiten.

25. Korrektursystem nach Anspruch 24, wobei jedes Korrekturmodul Folgendes umfasst:

ein Detektionssubmodul (1021), das dafür ausgelegt ist, die Gammakurveninformationen zu detektieren, wobei die Gammakurveninformationen Folgendes umfassen: den Gammapfad, der durch alle sequentiell kaskadierten lokalen Gammakurvenelemente (1011, 1012, ..., 101n) gebildet wird, in Form des äquivalenten Modells der Gammakurve entsprechend jedem Gammakurvenelement (1011, 1012, ..., 101n) und Parametern davon;
ein Speichersubmodul (1022), das dafür ausgelegt ist, die Gammakurveninformationen des lokalen Endgeräts und die des Endgeräts des fernen Endes zu speichern;
ein Ausführungssubmodul (1023), das dafür ausgelegt ist, ein Korrekturelementmodul gemäß den Gammakurveninformationen des lokalen Endgeräts und/oder denen des Endgeräts des fernen Endes zu konstruieren; und
ein Korrekturelement (1024), das dafür ausgelegt ist, die Gammakurven des Luminanzsignals gemäß dem Korrekturelementmodul zu korrigieren.

26. Korrektursystem nach Anspruch 25, wobei jedes Korrekturelement (1024) eines der folgenden Elemente oder eine beliebige Kombination davon umfasst:

ein erstes Korrektursubelement (10241), das dafür ausgelegt ist, die Gammakurvenkorrektur eines Luminanzsignals auszuführen;
ein zweites Korrektursubelement (10242), das dafür ausgelegt ist, die Gammakurvenkorrektur eines lokalen Luminanzsignals auszuführen; und
ein drittes Korrektursubelement (10243), das dafür ausgelegt ist, die Gammakurvenkorrektur eines Prüfschleifen-Luminanzsignals auszuführen.

27. Korrektursystem nach einem der Ansprüche 24 bis 26, wobei die zwei Endgeräte über ein Kommunikationsnetz verbunden sind und das Zentralservermodul in dem Kommunikationsnetz angeordnet ist.

28. Korrektursystem nach Anspruch 27, wobei sich das Kommunikationsnetz auf ein paketvermitteltes Netz oder ein leitungsvermitteltes Netz bezieht.

**Revendications**

1. Procédé permettant d'effectuer une correction de la caractéristique Gamma d'un signal de luminance transmis entre un premier terminal et un second terminal, dans lequel le premier terminal et le second terminal sont les terminaux distants correspondant respectivement l'un à l'autre, chacun du premier terminal et du second terminal comprend au moins un élément de caractéristique Gamma (1011, 1012,..., 101n) traversé par le signal de luminance pendant la communication établie entre le premier terminal et le second terminal, et provoquant une distorsion globale prédéfinie de la caractéristique Gamma du signal de luminance qui doit être compensée par ladite correction ; le procédé comprend :

la détermination, par le premier terminal et le second terminal, par l'intermédiaire d'une négociation, du fait que la correction de la caractéristique Gamma doit être effectuée ou non sur le signal de luminance en fonction d'informations sur la capacité de correction à la fois du premier terminal et du second terminal avant la communication ou pendant l'établissement de la communication, les informations sur la capacité de correction comprenant le fait que le premier terminal ou le second terminal peut effectuer la correction de la caractéristique Gamma et/ou des informations sur la capacité de traitement en cours, et

la sélection du premier terminal ou du second terminal comme terminal d'exécution de correction lorsque la correction doit être effectuée, et

l'exécution, par le terminal d'exécution de correction, de la correction de la caractéristique Gamma, en fonction des informations de caractéristique Gamma ; les informations de caractéristique Gamma comprenant un trajet de Gamma formé par la totalité des éléments de caractéristique Gamma en série que traverse séquentiellement le signal de luminance à la fois sur les premier et second terminaux sous la forme d'un modèle équivalent de caractéristique Gamma correspondant à chaque élément de caractéristique Gamma et à chaque paramètre de celui-ci,

lorsque la correction ne doit pas être effectuée, la caractéristique Gamma du signal de luminance n'est pas corrigée.

2. Procédé selon la revendication 1, dans lequel la sélection du premier terminal ou du second terminal comme terminal d'exécution de correction comprend :

la sélection du premier terminal pour qu'il soit le terminal d'exécution de correction lorsque seul le premier terminal est capable d'effectuer la correction de la caractéristique Gamma,

la sélection du second terminal pour qu'il soit le terminal d'exécution de correction lorsque seul le second terminal est capable d'effectuer la correction de la caractéristique Gamma,

la sélection d'un terminal présentant une capacité de traitement plus puissante à ce moment-là parmi le premier terminal ou le second terminal pour qu'il soit le terminal d'exécution de correction lorsque les deux terminaux sont capables d'effectuer la correction de la caractéristique Gamma, et

la sélection aléatoire d'un terminal parmi le premier terminal ou le second terminal pour qu'il soit le terminal d'exécution de correction, ou bien la sélection des deux terminaux pour qu'ils soient le terminal d'exécution de correction permettant de corriger la caractéristique Gamma du signal de luminance reçu depuis le terminal distant correspondant respectivement à l'autre, ou de corriger la caractéristique Gamma du signal de luminance envoyé vers le terminal distant correspondant respectivement à l'autre, lorsque les deux terminaux sont capables d'effectuer la correction de la caractéristique Gamma et que leurs capacités de traitement en cours sont équivalentes.

3. Procédé selon la revendication 2, comprenant en outre :

la détermination respective, par le premier terminal ou le second terminal, d'informations de caractéristique Gamma locales, et la mémorisation des informations de caractéristique Gamma en fonction des quatre catégories qui suivent :

les informations de caractéristique Gamma de catégorie I : un trajet de Gamma étant formé par la totalité des éléments de caractéristique Gamma en série, traversés séquentiellement par un signal de luminance, sur un terminal local qui est le premier terminal ou le second terminal, qui est envoyé au terminal distant correspondant au terminal local par le terminal local, tout comme le modèle équivalent correspondant de la caractéristique Gamma et des paramètres de celle-ci,

les informations de caractéristique Gamma de catégorie II : un trajet de Gamma étant formé par la totalité des éléments de caractéristique Gamma en série, traversés séquentiellement par un signal de luminance, sur le terminal local, qui est reçu en provenance du terminal distant correspondant au terminal local, tout comme le modèle équivalent correspondant de la caractéristique Gamma et des paramètres de celle-ci,

les informations de caractéristique Gamma de catégorie III : un trajet de Gamma étant formé par la totalité des éléments de caractéristique Gamma, traversés séquentiellement par un signal local de luminance, sur le terminal local, tout comme le modèle équivalent correspondant de la caractéristique Gamma et des paramètres de celle-ci, et

les informations de caractéristique Gamma de catégorie IV : un trajet de Gamma étant formé par la totalité des éléments de caractéristique Gamma en série, traversés séquentiellement par un signal de luminance local de bouclage, tout comme le modèle équivalent correspondant de la caractéristique Gamma et des paramètres de celle-ci.

4. Procédé selon la revendication 3, dans lequel les informations de caractéristique Gamma comprennent : les informations de caractéristique Gamma de catégorie I d'un terminal émettant un signal de luminance et les informations de caractéristique Gamma de catégorie II d'un terminal recevant un signal de luminance ; et le trajet de Gamma du signal de luminance est formé en fonction d'une séquence telle que le trajet de Gamma de catégorie I est disposé avant le trajet de Gamma de catégorie II.

**5.** Procédé selon la revendication 3 ou 4, comprenant en outre :

l'exécution, par un terminal sélectionné parmi le premier terminal ou le second terminal, qui est capable d'effectuer la correction de la caractéristique Gamma, d'une correction sur le signal local de luminance en fonction des informations de caractéristique Gamma de catégorie III et/ou sur la caractéristique Gamma du signal de luminance de bouclage en fonction des informations de caractéristique Gamma de catégorie IV.

**6.** Procédé selon la revendication 5, dans lequel la négociation entre le premier terminal et le second terminal comprend :

l'envoi, par le premier terminal au second terminal, d'un message de demande de négociation pour une correction Gamma, dans lequel le message de demande de négociation contient des informations sur la capacité de correction en cours du premier terminal,
la réception, par le second terminal, du message de demande de négociation pour une correction Gamma et le renvoi d'un message de réponse au premier terminal, dans lequel, si le terminal d'exécution de correction est sélectionné par le second terminal en fonction des informations sur les capacités de correction en cours des deux terminaux, les informations sur le terminal d'exécution de correction sont contenues dans le message de réponse et, s'il est déterminé par le second terminal qu'aucune
correction de la caractéristique Gamma ne doit être effectuée par les deux terminaux,
les informations d'indication correspondantes sont contenues dans le message de réponse.

**7.** Procédé selon la revendication 6, dans lequel :

lorsque le second terminal sélectionne le premier terminal pour être le terminal d'exécution de correction, et/ou que les deux terminaux sont sélectionnés pour être le terminal d'exécution de correction, le message de réponse comprend en outre les informations de caractéristique Gamma de catégorie I et II du second terminal, et lorsque le second terminal se sélectionne lui-même pour être le terminal d'exécution de correction, et/ou que les deux terminaux sont sélectionnés pour être le terminal d'exécution de correction, le premier terminal envoie ses informations de caractéristique Gamma de catégorie I et II au second terminal après avoir reçu le message de réponse.

**8.** Procédé selon la revendication 7, comprenant en outre :

la mise à jour, par le premier terminal ou par le second terminal, des informations de caractéristique Gamma dans le temps lorsque les informations de caractéristique Gamma varient pendant la communication, ainsi que l'utilisation des informations de caractéristique Gamma mises à jour afin d'effectuer la correction de la caractéristique Gamma du signal local de luminance et/ou du signal de luminance de bouclage, et
lorsque le premier terminal ou le second terminal est le terminal d'exécution de correction, l'envoi, par un terminal qui n'est pas chargé d'effectuer la correction, des informations modifiées de la caractéristique Gamma dans le temps au terminal d'exécution de correction afin d'effectuer la correction de la caractéristique Gamma du signal de luminance ; ou encore lorsque les deux terminaux sont le terminal d'exécution de correction, les informations modifiées de la caractéristique Gamma d'un terminal sont respectivement envoyées dans le temps à l'autre terminal, afin d'effectuer la correction de la caractéristique Gamma du signal de luminance.

**9.** Procédé selon la revendication 5, dans lequel la négociation entre le premier terminal et le second terminal comprend :

l'envoi respectif, par le premier terminal et le second terminal, des informations sur la capacité de correction en cours à un serveur central, et
la détermination, par le serveur central, du fait que la correction doit être effectuée ou non, ainsi que la sélection du terminal d'exécution de correction en fonction des capacités de correction en cours des deux terminaux, et le renvoi respectif d'un résultat au premier terminal et au second terminal.

**10.** Procédé selon la revendication 9, comprenant en outre :

l'envoi, par le premier terminal ou le second terminal, de toutes les informations de caractéristique Gamma au serveur central avant la communication ou pendant l'établissement de la communication, et

la gestion, par le serveur central, de toutes les informations de caractéristique Gamma grâce à une base de données spécialisée, les informations de caractéristique Gamma étant mémorisées dans la base de données en fonction d'une relation de correspondance parmi des informations d'identificateur ID du terminal, d'une catégorie des informations de caractéristique Gamma, d'un trajet en série de cette catégorie, ainsi que d'un modèle équivalent de la caractéristique Gamma et des paramètres de celle-ci, respectivement, et

lorsque le premier terminal ou le second terminal est le terminal d'exécution de correction, la récupération, par le terminal d'exécution de correction, des informations de caractéristique Gamma de catégorie I et de catégorie II du terminal qui n'est pas chargé d'effectuer la correction, à partir de la base de données afin d'effectuer la correction de la caractéristique Gamma du signal de luminance, ou

lorsque les deux terminaux sont le terminal d'exécution de correction, la récupération des informations de caractéristique Gamma du terminal distant correspondant à l'autre, à partir de la base de données afin de corriger la caractéristique Gamma du signal de luminance.

**11.** Procédé selon la revendication 10, comprenant en outre :

la mise à jour, par le premier terminal ou le second terminal, des informations de caractéristique Gamma dans le temps lorsque les informations de caractéristique Gamma varient pendant la communication, et l'utilisation des informations de caractéristique Gamma mises à jour afin d'effectuer la correction de la caractéristique Gamma du signal local de luminance et/ou du signal de luminance de bouclage, ainsi que l'envoi dans le temps d'informations de caractéristique Gamma modifiées au serveur central en vue d'une mise à jour, ou bien l'envoi de la totalité des informations de caractéristique Gamma au serveur central en vue d'un remplacement total, et lorsque le premier terminal ou le second terminal est le terminal d'exécution de correction, l'envoi dans le temps, par le serveur central, d'informations mises à jour reçues du terminal qui n'est pas chargé d'effectuer la correction au terminal d'exécution de correction afin d'exécuter la correction de la caractéristique Gamma du signal de luminance ; ou bien, lorsque les deux terminaux sont le terminal d'exécution de correction, l'envoi dans le temps, par le serveur central, des informations de caractéristique Gamma mises à jour d'un terminal, qui est le premier terminal ou le second terminal, à l'autre terminal afin de corriger la caractéristique Gamma du signal de luminance.

**12.** Procédé selon la revendication 6 ou 9, dans lequel le procédé d'exécution de la correction de la caractéristique Gamma du signal de luminance comprend :

la détermination du trajet de Gamma du signal de luminance en fonction des informations de caractéristique Gamma, où le nombre total des éléments de caractéristique Gamma compris dans le trajet de Gamma est Nt, la détermination d'un point de correction dans le trajet de Gamma, où le point de correction divise Nt éléments en deux parties : Na éléments en série avant le point de correction et Np éléments en série après le point de correction, où Na≥0, Np≥0 et Na + Np = Nt, l'établissement d'un premier modèle équivalent complet de caractéristique Gamma pour les Na éléments et la détermination d'un premier modèle inverse de celui-ci ainsi que l'établissement d'un second modèle équivalent complet de caractéristique Gamma pour les Np éléments et la détermination d'un second modèle inverse de celui-ci en fonction du modèle équivalent complet de la caractéristique Gamma de chaque élément et des paramètres de celle-ci, et l'établissement d'un modèle d'éléments de correction en fonction du premier modèle inverse et du second modèle inverse, la détermination d'un signal de luminance de correction pour un signal final de luminance en sortie des Na éléments avec le modèle d'éléments de correction, ainsi que l'application en entrée du signal de correction de luminance dans les Np éléments.

**13.** Procédé selon la revendication 12, dans lequel :

lorsque le modèle équivalent de caractéristique Gamma de chaque élément est représenté dans une fonction, le modèle équivalent complet de caractéristique Gamma des éléments en série est une fonction de composition correspondante, et une fonction de représentation du modèle inverse est une fonction inverse de la fonction de composition, et

lorsque le modèle équivalent complet de la caractéristique Gamma est représenté dans une table de données, le modèle inverse correspondant est une table inverse de la table de données.

**14.** Procédé selon la revendication 13, dans lequel :

lorsque le modèle équivalent de la caractéristique Gamma est représenté dans la fonction, un procédé d'établissement du modèle d'éléments de correction comprend : un procédé direct de calcul, dans lequel le signal de luminance de correction pour le signal final de luminance en sortie des Na éléments est calculé en temps réel avec la fonction de composition de la fonction du premier modèle inverse et de celle du second modèle inverse,

un procédé de calcul en deux étapes, dans lequel un premier signal de luminance de correction destiné au signal final de luminance de sortie des Na éléments est calculé en temps réel avec la fonction du premier modèle inverse, puis un second signal de luminance de correction du premier signal de luminance de correction est calculé avec la fonction du second modèle inverse, et le second signal de luminance de correction est utilisé comme signal de luminance de correction, ou

un procédé de table de consultation, dans lequel des valeurs de correction, correspondant à une pluralité de valeurs d'échantillons dans la plage des valeurs finales de sortie des Na éléments, sont calculées par avance en fonction du procédé de calcul direct ou du procédé de calcul en deux étapes, et une relation de correspondance est sauvegardée dans une table de données, puis la valeur de correction pour une valeur quelconque à corriger peut être obtenue par une interrogation en temps réel de la table de données,

lorsque le modèle équivalent de la caractéristique Gamma est représenté dans la table de données, le procédé de la table de consultation est utilisé pour déterminer la valeur de correction pour toute valeur à corriger.

**15.** Procédé selon la revendication 14, dans lequel, lorsque le modèle équivalent de la caractéristique Gamma est représenté dans la fonction, un processus de détermination, par le premier terminal ou le second terminal, du modèle équivalent de la caractéristique Gamma de chaque élément de caractéristique Gamma sur le premier terminal ou le second terminal et les paramètres de celui-ci, comprend :

M1. la détection respective de N valeurs LPout (i) d'un signal réel de luminance en sortie généré grâce à l'entrée de N valeurs d'échantillons Lin (i) d'un signal de luminance en entrée dans l'élément, où $0 \leq i \leq N-1$,

M2. la sélection d'un modèle à détecter à partir d'un jeu de modèles équivalents candidats de caractéristique Gamma représentés sous forme de fonctions, puis l'exécution de M3,

M3. la sélection d'un jeu de paramètres initiaux pour le modèle à détecter,

M4. l'exécution d'un calcul :

le calcul de N valeurs LMout (i) d'un signal théorique de luminance en sortie correspondant aux N valeurs d'échantillons en fonction du modèle à détecter, où $0 \leq i \leq N-1$, et

le calcul d'une valeur de fonction objet F, où la valeur de fonction objet F présente un rapport avec la différence de chaque paire des valeurs LPout (i) et des valeurs LMout (i) correspondantes,

M5. la détermination du fait que la valeur de fonction objet F est inférieure ou égale à une valeur de seuil configurée ou non ; si c'est le cas, il est déterminé que le modèle à détecter est accepté comme modèle équivalent final de la caractéristique Gamma, et

les paramètres correspondant à une valeur minimale de fonction objet F sont pris comme paramètres du modèle équivalent de la caractéristique Gamma, puis le processus passe à M8 ; sinon il y a exécution de M6,

M6. la détermination du fait que le nombre d'exécutions de M4 atteint un nombre d'itérations défini ou non ; si c'est le cas, un autre modèle équivalent de caractéristique Gamma est sélectionné parmi des modèles équivalents candidats de caractéristique Gamma qui ne sont pas détectés comme étant un modèle de caractéristique Gamma à détecter, puis le processus revient à M3 ; sinon, il y a exécution de M7,

M7. l'ajustement des paramètres du modèle à un procédé mathématique optimal, puis le processus revient à M4,

M8. la fin du processus.

**16.** Procédé selon la revendication 15, dans lequel, à l'étape M5, lorsque la valeur de fonction objet F est inférieure ou égale à la valeur de seuil configurée, les paramètres sont ajustés grâce au procédé mathématique optimal en fonction du nombre d'itérations configuré, et la valeur de fonction objet F est calculée, puis les paramètres correspondant à la valeur minimale de fonction objet F sont pris comme étant les paramètres du modèle équivalent de caractéristique Gamma.

**17.** Procédé selon la revendication 16, dans lequel la valeur de fonction objet F satisfait à la condition suivante :

$$F = \sum_{i=0}^{N-1} (L_{out}^{P}(i) - L_{out}^{M}(i))^2$$

18. Procédé selon la revendication 15, dans lequel les fonctions du jeu de modèles équivalents candidats de caractéristique Gamma représentées sous forme de fonctions, ainsi que les fonctions inverses correspondantes sont les suivantes :

la fonction du modèle équivalent de caractéristique Gamma est : $L_{out} = pL_{in}^{\alpha} + (1-p)$ , dans laquelle le domaine de définition de la fonction est un intervalle [0, 1] et une plage de valeurs est un intervalle [(1-p), 1] ; puis la fonction inverse de cette fonction est :

$$L_{out} = (\frac{1}{p}L_{in} + (1 - \frac{1}{p}))^{\frac{1}{\alpha}} ,$$

ou
la fonction du modèle équivalent de caractéristique Gamma est :

$$L_{out} = (qL_{in} + (1-q))^{\frac{1}{\beta}} ,$$ , dans laquelle le domaine de définition de la fonction est l'intervalle [1 - 1/q, 1] et la plage de valeurs est l'intervalle [0,1] ; puis la fonction inverse de cette fonction est :

$$L_{out} = \frac{1}{q}L_{in}^{\beta} + (1 - \frac{1}{q})$$

dans laquelle : Lin est une valeur du signal de luminance en entrée, Lout est une valeur d'un signal de luminance de sortie, p et $\alpha$ ainsi que q et $\beta$ sont des paramètres à mesurer respectivement, et lorsque Na = 1 ou que Np=1:0 <p≤1,α≥1,q≥1, β≥1 ; et lorsque Na>1 ou que Np>1 : 0 <p≤1, $\alpha \geq 0$, q ≥ 1, β ≥ 0.

19. Procédé selon la revendication 15, dans lequel le procédé mathématique optimal est : le procédé d'escalade, le procédé de l'inverse du nombre d'or 0,618, le procédé du lieu de plus grande pente ou le procédé du gradient conjugué.

20. Procédé selon la revendication 15, dans lequel les N valeurs d'échantillons du signal de luminance en entrée sont sélectionnées à partir de l'intervalle [0, 1].

21. Système permettant d'effectuer une correction de la caractéristique Gamma d'un signal de luminance transmis entre un premier terminal et un second terminal, ledit système comprenant ledit premier terminal et ledit second terminal, dans lequel le premier terminal et le second terminal sont les terminaux distants correspondant respectivement l'un à l'autre, chacun du premier terminal et du second terminal comprend au moins un élément de caractéristique Gamma (1011, 1012,..., 101n) traversé par le signal de luminance pendant la communication établie entre le premier terminal et le second terminal, et provoquant une distorsion globale prédéfinie de la caractéristique Gamma du signal de luminance qui doit être compensée par ladite correction ;
dans lequel chaque terminal comprend en outre : un module d'interface de communication (103) et un module de correction (102),
chaque module d'interface de communication (103) étant conçu pour effectuer une négociation de correction avec le terminal distant respectif et sélectionner le terminal de communication ou le terminal distant pour qu'il soit un terminal d'exécution de correction, et pour transférer au module de correction un résultat de négociation sur le fait que la correction doit être effectuée ou non et/ou des informations sur le terminal d'exécution de correction sélectionné, ainsi que des informations de caractéristique Gamma du terminal distant, et
chaque module de correction (102) étant conçu pour effectuer la correction de la caractéristique Gamma en fonction des informations de caractéristique Gamma du terminal de communication et/ou du terminal distant, dans lequel les informations de caractéristique Gamma comprennent un trajet de Gamma formé par la totalité des éléments de caractéristique Gamma séquentiellement en série (1011, 1012,..., 101n) qui sont traversés par le signal de luminance sous la forme d'un modèle équivalent de caractéristique Gamma correspondant à chaque élément de caractéristique Gamma et aux paramètres de celui-ci.

22. Système selon la revendication 21, dans lequel chaque module de correction (102) destiné à la caractéristique Gamma comprend :

un sous-module de détection (1021) conçu pour détecter les informations de caractéristique Gamma, dans lequel les informations de caractéristique Gamma comprennent le trajet de Gamma formé par la totalité des éléments locaux de caractéristique Gamma séquentiellement en série (1011, 1012,..., 101n) ainsi qu'un modèle équivalent de caractéristique Gamma correspondant à chaque élément de caractéristique Gamma et aux paramètres de celui-ci,

un sous-module de mémorisation (1022) conçu pour stocker les informations de caractéristique Gamma,

un sous-module d'exécution (1023) conçu pour élaborer un module d'éléments de correction en fonction des informations de caractéristique Gamma sauvegardées sur le terminal local et/ou reçues en provenance du terminal distant correspondant au terminal de communication, et

un élément de correction (1024) conçu pour corriger la caractéristique Gamma du signal de luminance en fonction du module d'éléments de correction.

23. Système selon la revendication 22, dans lequel les éléments de correction (1024) comprennent l'un des éléments qui suivent ou une quelconque combinaison de ceux-ci :

un premier sous-élément de correction (10241) conçu pour corriger la caractéristique Gamma d'un signal de luminance,

un deuxième sous-élément de correction (10242) conçu pour corriger la caractéristique Gamma d'un signal local de luminance, et

un troisième sous-élément de correction (10243) conçu pour corriger la caractéristique Gamma d'un signal de luminance de bouclage.

24. Système permettant d'effectuer une correction de la caractéristique Gamma d'un signal de luminance transmis entre un premier terminal et un second terminal, ledit système comprenant ledit premier terminal et ledit second terminal, dans lequel le premier terminal et le second terminal sont les terminaux distants correspondant respectivement l'un à l'autre, chacun du premier terminal et du second terminal comprend au moins un élément de caractéristique Gamma (1011, 1012,..., 101n) traversé par le signal de luminance pendant la communication établie entre le premier terminal et le second terminal, et provoquant une distorsion globale prédéfinie de la caractéristique Gamma du signal de luminance qui doit être compensée par ladite correction ;

dans lequel chaque terminal comprend en outre un module d'interface de communication (103) et un module de correction (102), et le système comprend en outre un module serveur central connecté à chaque module de correction (102) par l'intermédiaire d'une communication,

dans lequel chaque module de correction (102) est conçu pour détecter et sauvegarder des informations de caractéristique Gamma sur un terminal local qui est le premier terminal ou le second terminal, et pour envoyer les informations de caractéristique

Gamma au module serveur central avant que la communication soit établie, et il est conçu pour effectuer la correction de la caractéristique Gamma en fonction des informations de caractéristique Gamma du terminal distant et/ou de celles du terminal local, dans lequel les informations de caractéristique Gamma sont obtenues à partir du module serveur central ou bien envoyées à l'origine par le module serveur central, et comprennent un trajet de Gamma formé par la totalité des éléments de caractéristique Gamma (1011, 1012,..., 101n) séquentiellement en série qui sont traversés par le signal de luminance sous la forme d'un modèle équivalent de caractéristique Gamma correspondant à chaque élément de caractéristique Gamma et aux paramètres de celui-ci,

dans lequel chaque module d'interface de communication (103) est connecté entre le module de correction (102) du terminal local respectif et le module serveur central, et est conçu pour fournir une interface de communication pour le module de correction (102) et pour recevoir ou émettre les informations de caractéristique Gamma échangées entre un module de correction local (102) sur un terminal local qui est le premier terminal ou le second terminal et le module serveur central, ou bien entre le module de correction local (102) et un module de correction distant sur le terminal distant, et

dans lequel le module d'interface de communication (103) est en outre conçu pour échanger des informations sur les capacités de correction de la caractéristique Gamma des deux terminaux engagés directement dans une correction avec le terminal distant dans la communication, et pour déterminer si la correction de caractéristique Gamma doit être effectuée ou non et pour sélectionner le premier terminal ou le second terminal comme terminal d'exécution de correction ; ou encore le module d'interface de communication (103) est conçu pour transférer une détermination sur le fait que la correction doit être effectuée par le module serveur central ou non et/ou des informations sur le terminal d'exécution de correction sélectionné en fonction des capacités de correction des deux terminaux ainsi que des informations de caractéristique Gamma du terminal distant vers le module de correction (102).

**25.** Système de correction selon la revendication 24, dans lequel chaque module de correction comprend :

un sous-module de détection (1021) conçu pour détecter les informations de caractéristique Gamma, dans lequel les informations de caractéristique Gamma
comprennent le trajet de Gamma formé par la totalité des éléments locaux de caractéristique Gamma séquentiellement en série (1011, 1012,..., 101n) sous la forme du modèle équivalent de caractéristique Gamma correspondant à chaque élément de caractéristique Gamma (1011, 1012, ..., 101 n) et des paramètres de celui-ci,
un sous-module de mémorisation (1022) conçu pour stocker les informations de caractéristique Gamma du terminal local et celles du terminal distant,
un sous-module d'exécution (1023) conçu pour élaborer un module d'éléments de correction en fonction des informations de caractéristique Gamma du terminal local et/ou de celles du terminal distant, et
un élément de correction (1024) conçu pour corriger la caractéristique Gamma du signal de luminance en fonction du module d'éléments de correction.

**26.** Système de correction selon la revendication 25, dans lequel chaque élément de correction (1024) comprend l'un des éléments qui suivent ou une quelconque combinaison de ceux-ci :

un premier sous-élément de correction (10241) conçu pour effectuer la correction de la caractéristique Gamma d'un signal de luminance,
un deuxième sous-élément de correction (10242) conçu pour effectuer la correction de la caractéristique Gamma d'un signal local de luminance, et
un troisième sous-élément de correction (10243) conçu pour effectuer la correction de la caractéristique Gamma d'un signal de luminance de bouclage.

**27.** Système de correction selon l'une quelconque des revendications 24 à 26, dans lequel les deux terminaux sont connectés par l'intermédiaire d'un réseau de communication et le module serveur central est placé dans le réseau de communication.

**28.** Système de correction selon la revendication 27, dans lequel le réseau de communication fait référence à un réseau à commutation de paquets ou à un réseau à commutation de circuits.

Lin Input
luminance signal

Element Gamma characteristics

Lout=G(Lin)

Lout Output
luminance signal

Figure 1

Lin Input
luminance
signal

Lout Output
luminance
signal

Lout=G$^{(1)}$ (Lin)

Lout=G$^{(2)}$ (Lin)

Lout=G$^{(3)}$ (Lin)

Figure 2

Lin Input
luminance
signal
→

| Specified element |
| Lout= Gg(Lin) |

→

| Correction element |
| Lout= Gc(Lin) |

→ Lout Output
luminance
signal

## Figure 3

Lin Input
luminance
signal

Lout Output
luminance
signal

| Preceding specified element Lout= Ga(Lin) | → | Correction element Lout= Gc(Lin) | → | Succeeding specified element Lout= Gp(Lin) | → |

Figure 4

Figure 5

Figure 6

Figure 7

Figure 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1043885 A2